# EUROPEAN PATENT APPLICATION

(11) **EP 4 583 596 A1**
(43) Date of publication of application: **09.07.2025**
(21) Application number: 23870289.8
(22) Date of filing: 11.09.2023
(51) Int. Cl.: H04W 56/00, H04J 3/06

(54) **COMMUNICATION METHOD AND APPARATUS**

(30) Priority: 30.09.2022 CN 202211214331
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Goddar, Heinz J.
(86) International application number: PCT/CN2023/118076
(87) International publication number: WO 2024/067050

(57) **Abstract**

Embodiments of this application provide a communication method and apparatus, to resolve a problem that a change of 5GS clock information cannot be determined in a time provision process. The communication method and apparatus may be used in a 5G system. The method includes: A first network element determines that quality information of a first clock needs to be obtained, and sends first indication information to a second network element, where the first clock is a reference clock of a wireless communication system, and the first indication information indicates to obtain the quality information of the first clock. The first network element receives the quality information of the first clock from the second network element, and sends the quality information of the first clock to a terminal device.

## Description

This application claims priority to Chinese Patent Application No. 202211214331.6, filed with the China National Intellectual Property Administration on September 30, 2022 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

A time provision capability of a 5th generation (5th generation, 5G) network is a network function that can be exposed to the external. Time provision capability exposure defined in Release 17 (Release 17, R17 for short) may be activated and deactivated by an application function (application function, AF), to perform time provision for a terminal device.

Specifically, the AF sends an access stratum clock information time provision request to a network exposure function (network exposure function, NEF), and then the NEF forwards the access stratum clock information time provision request to a time sensitive communication and time synchronization function (time sensitive communication and time synchronization function, TSCTSF). After receiving the access stratum clock information time provision request, the TSCTSF activates a time provision capability of an access network device, calculates an air interface time provision error of the access network device, and sends a time provision indication and the air interface time provision error of the access network device to a policy control function (policy control function, PCF). The PCF updates an access and mobility (access and mobility, AM) policy (policy) with an access and mobility management function (access and mobility management function, AMF), and sends the time provision indication and the air interface time provision error of the access network device to the AMF, so that the AMF indicates the access network device to start providing time for the terminal device with the specified error, to provide access stratum clock information for the terminal device. When performing a time provision service for the terminal device, the TSCTSF may alternatively obtain clock subscription information of the terminal device from a unified data management (unified data management, UDM), and complete the time provision for the terminal device with reference to the clock subscription information of the terminal device.

Currently, in addition to the foregoing manner in which the AF triggers the access network device to send the access stratum clock information, the terminal device may further obtain the access stratum clock information by using a system information block (system information block, SIB) message broadcast by the access network device, or request the access stratum clock information by sending a radio resource control (radio resource control, RRC) message to the access network device.

However, in the foregoing time provision process, the terminal device can obtain only 5G system (5th generation system, 5GS) clock information synchronized by the access network device, and cannot determine a change of the 5GS clock information. Consequently, the terminal device cannot compare a 5GS clock with another available clock (available clock), and cannot select an optimal and most accurate clock as a grandmaster.

### SUMMARY

Embodiments of this application provide a communication method and apparatus, to resolve a problem that a terminal device cannot determine a change of 5GS clock information.

To achieve the foregoing objective, the following technical solutions are used in embodiments of this application.

According to a first aspect, a communication method is provided. The method may be performed by a first network element, may be performed by a component of the first network element, for example, a processor, a chip, or a chip system of the first network element, or may be implemented by a logical module or software that can implement all or some functions of the first network element. The following uses an example in which the method is performed by the first network element for description. The communication method includes: A first network element determines that quality information of a first clock needs to be obtained. The first clock is a reference clock of a wireless communication system. The first network element sends first indication information to a second network element. The first indication information indicates to obtain the quality information of the first clock. The first network element receives the quality information of the first clock from the second network element, and sends the quality information of the first clock to a terminal device.

Based on the communication method, in a process of providing time for the terminal device, the first network element may trigger, by using the first indication information, the second network element to obtain the quality information of the first clock, so that the first network element can obtain the quality information of the first clock from the second network element and provide the quality information of the first clock for the terminal device. Then, after obtaining the quality information of the first clock, for example, the terminal device may compare the first clock with another available clock based on the quality information of the first clock, to select a better and more accurate clock as a grandmaster.

In a possible design solution, the first network element is a mobility management network element. That a first network element determines that quality information of a first clock needs to be obtained may include: The first network element sends, to an access network device, information used to confirm whether the access network device has the quality information of the first clock. The first network element receives a confirmation response from the access network device. The confirmation response indicates that the access network device does not have the quality information of the first clock. The first network element determines, based on the confirmation response, that the quality information of the first clock needs to be obtained. In this way, when the quality information of the first clock is not deployed on the access network device, the mobility management network element may trigger a procedure of obtaining the quality information of the first clock, to enable the terminal device to obtain the quality information of the first clock.

In a possible design solution, that the first network element sends the quality information of the first clock to a terminal device may include: The first network element sends a non-access stratum NAS message to the terminal device. The NAS message includes the quality information of the first clock. In this way, when the first network element is the mobility management network element, after obtaining the quality information of the first clock, the first network element may send the quality information of the first clock to the terminal device in a transparent transmission manner. This reduces signaling overheads and may improve a rate at which the terminal device obtains the quality information of the first clock.

Further, the communication method provided in this embodiment of this application may further include: The first network element receives second indication information from the terminal device. The second indication information indicates that the terminal device requests to stop time provision. The first network element sends third indication information to the access network device. The third indication information indicates the access network device to stop providing time for the terminal device. In this way, when the first network element is the mobility management network element, the first network element may control, based on a time provision stop indication sent by the terminal device, the access network device to stop providing time for the terminal device, to achieve an objective of stopping providing time for the terminal device.

In a possible design solution, the second network element may be an operations, administration and maintenance network element or a time synchronization network element.

In another possible design solution, the first network element is an access network device. That a first network element determines that quality information of a first clock needs to be obtained may include: The first network element receives a time provision request from the terminal device. The time provision request includes the first indication information. The first network element determines, based on the first indication information, whether the first network element has the quality information of the first clock. When determining that the first network element does not have the quality information of the first clock, the first network element determines that the quality information of the first clock needs to be obtained. In this way, in a scenario in which the terminal device autonomously requests the time provision, the access network device may trigger a procedure of obtaining the quality information of the first clock, to enable the terminal device to obtain the quality information of the first clock.

Further, the communication method provided in this embodiment of this application may further include: The first network element receives second indication information from the terminal device. The second indication information indicates that the terminal device requests to stop time provision. The first network element sends fourth indication information to the terminal device. The fourth indication information indicates that the first network element has stopped providing time for the terminal device. In this way, when the first network element is the access network device, the first network element may autonomously determine, based on a time provision stop indication sent by the terminal device, to stop providing time for the terminal device.

Optionally, the fourth indication information may be carried in an RRC message.

In a possible design solution, that the first network element sends the quality information of the first clock to a terminal device may include: The first network element sends a radio resource control RRC message to the terminal device. The RRC message may include the quality information of the first clock.

In another possible design solution, that the first network element sends the quality information of the first clock to a terminal device may include: The first network element sends a system message to the terminal device. The system message may include the quality information of the first clock.

Optionally, the quality information of the first clock may include one or more of the following: a quality level, crystal oscillator stability, precision, or coordinated universal time UTC traceability.

According to a second aspect, a communication method is provided. The method may be performed by a second network element, may be performed by a component of the second network element, for example, a processor, a chip, or a chip system of the second network element, or may be implemented by a logical module or software that can implement all or some functions of the second network element. The following uses an example in which the method is performed by the second network element for description. The communication method includes: A second network element receives first indication information from a first network element. The first indication information indicates to obtain quality information of a first clock, and the first clock is a reference clock of a wireless communication system. The second network element obtains the quality information of the first clock based on the first indication information. The second network element sends the quality information of the first clock to the first network element.

In a possible design solution, the second network element is a time synchronization network element. That the second network element obtains the quality information of the first clock based on the first indication information may include: The second network element sends a first message to a user plane network element based on the first indication information. The first message is used to request the quality information of the first clock. The second network element receives the quality information of the first clock from the user plane network element.

In another possible design solution, the second network element may be a time synchronization network element. That the second network element obtains the quality information of the first clock based on the first indication information may include: The second network element sends a second message to an operations, administration and maintenance network element based on the first indication information. The second message is used to request the quality information of the first clock. The second network element receives the quality information of the first clock from the operations, administration and maintenance network element.

Further, the communication method provided in this embodiment of this application may further include: The second network element receives second indication information from a terminal device. The second indication information indicates that the terminal device requests to stop time provision. The second network element sends third indication information to an access network device. The third indication information indicates the access network device to stop providing time for the terminal device.

Optionally, the first network element is a mobility management network element or the access network device.

In a possible design solution, the first network element is a mobility management network element, and the second network element is an operations, administration and maintenance network element.

Optionally, the quality information of the first clock may include one or more of the following: a quality level, crystal oscillator stability, precision, or coordinated universal time UTC traceability.

For technical effects of the communication method according to the second aspect, refer to the technical effects of the communication method according to the first aspect. Details are not described herein again.

According to a third aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The following uses an example in which the method is performed by the terminal device for description. The communication method includes: A terminal device receives quality information of a first clock from a first network element. The first clock is a reference clock of a wireless communication system. The terminal device determines, based on the quality information of the first clock, that an access network device needs to continue to provide time for the terminal device. Alternatively, the terminal device determines, based on the quality information of the first clock, that an access network device needs to stop providing time for the terminal device.

In a possible design solution, the first network element is the access network device. The communication method provided in this embodiment of this application may further include: The terminal device sends second indication information to the first network element when determining that the access network device needs to stop providing time for the terminal device. The second indication information indicates that the terminal device requests to stop time provision. The terminal device receives fourth indication information from the first network element. The fourth indication information indicates that the first network element has stopped providing time for the terminal device. In this way, after receiving the quality information of the first clock, the terminal device may determine, based on the quality information of the first clock, a change of the first clock. When the first clock is not as good as a clock locally deployed on the terminal device, the terminal device may send a time provision stop indication to the access network device, to notify, in a timely manner, a network that the network no longer needs to provide time for the terminal device.

In a possible design solution, that a terminal device receives quality information of a first clock from a first network element may include: The terminal device receives a radio resource control RRC message from the first network element. The RRC message includes the quality information of the first clock.

In another possible design solution, that a terminal device receives quality information of a first clock from a first network element includes: The terminal device receives a system message from the first network element. The system message includes the quality information of the first clock.

In a possible design solution, the first network element is a mobility management network element. The communication method provided in this embodiment of this application may further include: The terminal device sends second indication information to the first network element when determining that the access network device needs to stop providing time for the terminal device. The second indication information indicates that the terminal device requests to stop time provision.

In a possible design solution, the first network element is a mobility management network element. The communication method provided in this embodiment of this application may further include: The terminal device sends second indication information to a time synchronization network element when determining that the access network device needs to stop providing time for the terminal device. The second indication information indicates that the terminal device requests to stop time provision.

In a possible design solution, that a terminal device receives quality information of a first clock from a first network element may include: The terminal device receives a non-access stratum NAS message from the first network element. The NAS message includes the quality information of the first clock.

Optionally, the quality information of the first clock may include one or more of the following: a quality level, crystal oscillator stability, precision, or coordinated universal time UTC traceability.

For technical effects of the communication method according to the third aspect, refer to the technical effects of the communication method according to the first aspect. Details are not described herein again.

According to a fourth aspect, a communication method is provided. The method may be performed by a time synchronization network element, may be performed by a component of the time synchronization network element, for example, a processor, a chip, or a chip system of the time synchronization network element, or may be implemented by a logical module or software that can implement all or some functions of the time synchronization network element. The following uses an example in which the method is performed by the time synchronization network element for description. The communication method includes: A time synchronization network element receives fifth indication information from an application network element. The fifth indication information indicates a wireless communication network to provide quality information of a first clock for a terminal device, and the first clock is a reference clock of the wireless communication system. The time synchronization network element obtains the quality information of the first clock based on the fifth indication information. The time synchronization network element sends the quality information of the first clock to the terminal device.

Based on the communication method, the time synchronization network element may trigger, based on the fifth indication information sent by the application network element, obtaining of the quality information of the first clock, to provide the quality information of the first clock for the terminal device. Then, after obtaining the quality information of the first clock, for example, the terminal device may compare the first clock with another available clock based on the quality information of the first clock, to select a better and more accurate clock as a grandmaster.

In a possible design solution, that the time synchronization network element obtains the quality information of the first clock based on the fifth indication information may include: The time synchronization network element sends a third message to a user plane network element based on the fifth indication information. The third message is used to request the quality information of the first clock. The time synchronization network element receives the quality information of the first clock from the user plane network element.

In another possible design solution, that the time synchronization network element obtains the quality information of the first clock based on the fifth indication information may include: The time synchronization network element sends a fourth message to an operations, administration and maintenance network element based on the fifth indication information. The fourth message is used to request the quality information of the first clock. The time synchronization network element receives the quality information of the first clock from the operations, administration and maintenance network element.

In a possible design solution, before that a time synchronization network element receives fifth indication information from an application network element, the communication method provided in this embodiment of this application may further include: The time synchronization network element receives first indication information from the application network element. The first indication information indicates to obtain the quality information of the first clock, and the quality information of the first clock is used by the application network element to determine whether to continue to apply for a time provision service for the terminal device. The time synchronization network element obtains the quality information of the first clock based on the first indication information. The time synchronization network element sends the quality information of the first clock to the application network element. Correspondingly, that the time synchronization network element obtains the quality information of the first clock based on the fifth indication information includes: The time synchronization network element locally obtains the quality information of the first clock based on the fifth indication information.

In a possible design solution, that the time synchronization network element sends the quality information of the first clock to the terminal device may include: The time synchronization network element sends, to an access network device, information used to confirm whether the access network device has the quality information of the first clock. The time synchronization network element receives a confirmation response from the access network device. The confirmation response indicates that the access network device does not have the quality information of the first clock. The time synchronization network element sends the quality information of the first clock to the terminal device based on the confirmation response.

In a possible design solution, the communication method provided in this embodiment of this application may further include: The time synchronization network element receives second indication information from the terminal device. The second indication information indicates that the terminal device requests to stop time provision. The time synchronization network element sends third indication information to the access network device. The third indication information indicates the access network device to stop providing time for the terminal device.

Optionally, the quality information of the first clock may include one or more of the following: a quality level, crystal oscillator stability, precision, or coordinated universal time UTC traceability.

According to a fifth aspect, a communication method is provided. The method may be performed by an application network element, may be performed by a component of the application network element, for example, a processor, a chip, or a chip system of the application network element, or may be implemented by a logical module or software that can implement all or some functions of the application network element. The following uses an example in which the method is performed by the application network element for description. The communication method includes: An application network element sends fifth indication information to a time synchronization network element. The fifth indication information indicates a wireless communication system to provide quality information of a first clock for a terminal device, and the first clock is a reference clock of the wireless communication system.

In a possible design solution, before that an application network element sends fifth indication information to a time synchronization network element, the method provided in this embodiment of this application further includes: The application network element sends first indication information to the time synchronization network element. The first indication information indicates to obtain the quality information of the first clock. The application network element receives the quality information of the first clock from the time synchronization network element. The application network element determines, based on the quality information of the first clock, to continue to apply for a time provision service for the terminal device.

In a possible design solution, the communication method provided in this embodiment of this application may further include: The application network element receives sixth indication information from the terminal device. The sixth indication information indicates the application network element to request to stop applying for the time provision service for the terminal device.

Optionally, the quality information of the first clock may include one or more of the following: a quality level, crystal oscillator stability, precision, or coordinated universal time UTC traceability.

For technical effects of the communication method according to the fifth aspect, refer to the technical effects of the communication method according to the fourth aspect. Details are not described herein again.

According to a sixth aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The following uses an example in which the method is performed by the terminal device for description. The communication method includes: A terminal device receives quality information of a first clock from a time synchronization network element. The quality information of the first clock is used by the terminal device to determine whether an access network device needs to continue to provide time for the terminal device, and the first clock is a reference clock of a wireless communication system. The terminal device determines, based on the quality information of the first clock, that the access network device needs to continue to provide time for the terminal device. Alternatively, the terminal device determines, based on the quality information of the first clock, that the access network device needs to stop providing time for the terminal device.

In a possible design solution, the communication method provided in this embodiment of this application may further include: The terminal device sends second indication information to the access network device when determining that the access network device needs to stop providing time for the terminal device. The second indication information indicates that the terminal device requests to stop time provision. The terminal device receives fourth indication information from the access network device. The fourth indication information indicates that the access network device has stopped providing time for the terminal device.

Optionally, the fourth indication information may be carried in an RRC message.

In a possible design solution, a first network element is a mobility management network element. The communication method provided in this embodiment of this application may further include: The terminal device sends second indication information to the time synchronization network element when determining that the access network device needs to stop providing time for the terminal device. The second indication information indicates that the terminal device requests to stop time provision.

In a possible design solution, a first network element is a mobility management network element. The communication method provided in this embodiment of this application may further include: The terminal device sends second indication information to the mobility management network element when determining that the access network device needs to stop providing time for the terminal device. The second indication information indicates that the terminal device requests to stop time provision.

In a possible design solution, the communication method provided in this embodiment of this application may further include: The terminal device sends sixth indication information to an application network element when determining that the access network device needs to stop providing time for the terminal device. The sixth indication information indicates the application network element to request to stop applying for a time provision service for the terminal device.

Optionally, the quality information of the first clock may include one or more of the following: a quality level, crystal oscillator stability, precision, or coordinated universal time UTC traceability.

For technical effects of the communication method according to the sixth aspect, refer to the technical effects of the communication method according to the fourth aspect. Details are not described herein again.

According to a seventh aspect, a communication apparatus is provided to implement the foregoing methods. The communication apparatus may be the first network element in the first aspect, an apparatus including the first network element, or an apparatus included in the first network element, for example, a chip. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to determine that quality information of a first clock needs to be obtained. The first clock is a reference clock of a wireless communication system. The transceiver module is configured to send first indication information to a second network element. The first indication information indicates to obtain the quality information of the first clock. The transceiver module is configured to receive the quality information of the first clock from the second network element, and send the quality information of the first clock to a terminal device.

In a possible design solution, the communication apparatus according to the seventh aspect is a mobility management network element. That the processing module is configured to determine that quality information of a first clock needs to be obtained specifically includes: The processing module is configured to send, to an access network device by using the transceiver module, information used to confirm whether the access network device has the quality information of the first clock, receive a confirmation response from the access network device by using the transceiver module, and when the confirmation response indicates that the access network device does not have the quality information of the first clock, determine, based on the confirmation response, that the quality information of the first clock needs to be obtained.

In a possible design solution, that the transceiver module is further configured to send the quality information of the first clock to the terminal device specifically includes: The transceiver module is configured to send a non-access stratum NAS message to the terminal device. The NAS message includes the quality information of the first clock.

Further, the transceiver module is further configured to receive second indication information from the terminal device. The second indication information indicates that the terminal device requests to stop time provision. The transceiver module is further configured to send third indication information to the access network device. The third indication information indicates the access network device to stop providing time for the terminal device.

In a possible design solution, the communication apparatus according to the seventh aspect may be an operations, administration and maintenance network element or a time synchronization network element.

In another possible design solution, the communication apparatus according to the seventh aspect is an access network device. That the processing module is configured to determine that quality information of a first clock needs to be obtained specifically includes: The processing module is configured to receive a time provision request from the terminal device by using the transceiver module, determine, based on the first indication information included in the time provision request, whether the first network element has the quality information of the first clock, and determine that the quality information of the first clock needs to be obtained when determining that the first network element does not have the quality information of the first clock.

Further, the transceiver module is further configured to receive second indication information from the terminal device. The second indication information indicates that the terminal device requests to stop time provision. The transceiver module is further configured to send fourth indication information to the terminal device. The fourth indication information indicates that the first network element has stopped providing time for the terminal device.

Optionally, the fourth indication information may be carried in an RRC message.

In a possible design solution, that the transceiver module is further configured to send the quality information of the first clock to the terminal device may include: The transceiver module is further configured to send a radio resource control RRC message to the terminal device. The RRC message may include the quality information of the first clock.

In another possible design solution, that the transceiver module is further configured to send the quality information of the first clock to the terminal device may include: The transceiver module is further configured to send a system message to the terminal device. The system message may include the quality information of the first clock.

Optionally, the quality information of the first clock may include one or more of the following: a quality level, crystal oscillator stability, precision, or coordinated universal time UTC traceability.

Optionally, the transceiver module in this embodiment of this application may include a receiving module and a sending module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module, and the storage module stores a program or instructions. When the processing module executes the program or instructions, the communication apparatus according to the seventh aspect is enabled to perform the communication method according to the first aspect.

For technical effects of the communication apparatus according to the seventh aspect, refer to the technical effects of the communication method according to the first aspect. Details are not described herein again.

According to an eighth aspect, a communication apparatus is provided to implement the foregoing methods. The communication apparatus may be the second network element in the second aspect, an apparatus including the second network element, or an apparatus included in the second network element, for example, a chip. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a receiving module. The transceiver module is configured to receive first indication information from a first network element. The first indication information indicates to obtain quality information of a first clock, and the first clock is a reference clock of a wireless communication system. The processing module is configured to obtain the quality information of the first clock based on the first indication information. The transceiver module is further configured to send the quality information of the first clock to the first network element.

In a possible design solution, the communication apparatus according to the eighth aspect may be a time synchronization network element. That the processing module is configured to obtain the quality information of the first clock based on the first indication information specifically includes: The processing module is configured to send a first message to a user plane network element based on the first indication information by using the transceiver module, and receive the quality information of the first clock from the user plane network element by using the transceiver module. The first message is used to request the quality information of the first clock.

In another possible design solution, the communication apparatus according to the eighth aspect may be a time synchronization network element. That the processing module is configured to obtain the quality information of the first clock based on the first indication information specifically includes: The processing module is configured to send a second message to an operations, administration and maintenance network element based on the first indication information by using the transceiver module, and receive the quality information of the first clock from the operations, administration and maintenance network element by using the transceiver module. The second message is used to request the quality information of the first clock.

Further, the transceiver module is further configured to receive second indication information from the terminal device. The second indication information indicates that the terminal device requests to stop time provision. The transceiver module is further configured to send third indication information to an access network device. The third indication information indicates the access network device to stop providing time for the terminal device.

Optionally, the communication apparatus according to the eighth aspect may be a mobility management network element or an access network device.

In a possible design solution, the first network element is a mobility management network element, and the communication apparatus according to the eighth aspect is an operations, administration and maintenance network element.

Optionally, the quality information of the first clock may include one or more of the following: a quality level, crystal oscillator stability, precision, or coordinated universal time UTC traceability.

Optionally, the transceiver module in this embodiment of this application may include a receiving module and a sending module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or instructions, the communication apparatus according to the eighth aspect is enabled to perform the communication method according to the second aspect.

For technical effects of the communication apparatus according to the eighth aspect, refer to the technical effects of the communication method according to the second aspect. Details are not described herein again.

According to a ninth aspect, a communication apparatus is provided to implement the foregoing methods. The communication apparatus may be the terminal device in the third aspect, an apparatus including the terminal device, or an apparatus included in the terminal device, for example, a chip. The communication apparatus includes a corresponding module, unit, or means (means) for implementing the method according to the third aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive quality information of a first clock from a first network element. The first clock is a reference clock of a wireless communication system. The processing module is configured to determine, based on the quality information of the first clock, that an access network device needs to continue to provide time for the terminal device. Alternatively, the processing module is configured to determine, based on the quality information of the first clock, that an access network device needs to stop providing time for the terminal device.

In a possible design solution, the first network element is the access network device. The transceiver module is further configured to send second indication information to the first network element when the processing module determines that the access network device needs to stop providing time for the terminal device. The second indication information indicates that the terminal device requests to stop time provision. The transceiver module is further configured to receive fourth indication information from the first network element. The fourth indication information indicates that the first network element has stopped providing time for the terminal device.

In a possible design solution, that the transceiver module is further configured to receive quality information of a first clock from a first network element specifically includes: The transceiver module is further configured to receive a radio resource control RRC message from the first network element. The RRC message includes the quality information of the first clock.

In another possible design solution, that the transceiver module is further configured to receive quality information of a first clock from a first network element specifically includes: The transceiver module is further configured to receive a system message from the first network element. The system message includes the quality information of the first clock.

In a possible design solution, the first network element is a mobility management network element. The transceiver module is further configured to send second indication information to the first network element when the processing module determines that the access network device needs to stop providing time for the terminal device. The second indication information indicates that the terminal device requests to stop time provision.

In a possible design solution, the first network element is a mobility management network element. The transceiver module is further configured to send second indication information to a time synchronization network element when the processing module determines that the access network device needs to stop providing time for the terminal device. The second indication information indicates that the terminal device requests to stop time provision.

In a possible design solution, that the transceiver module is further configured to receive quality information of a first clock from a first network element specifically includes: The transceiver module is further configured to receive a non-access stratum NAS message from the first network element. The NAS message includes the quality information of the first clock.

Optionally, the quality information of the first clock may include one or more of the following: a quality level, crystal oscillator stability, precision, or coordinated universal time UTC traceability.

Optionally, the transceiver module in this embodiment of this application may include a receiving module and a sending module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module, and the storage module stores a program or instructions. When the processing module executes the program or instructions, the communication apparatus according to the ninth aspect is enabled to perform the communication method according to the third aspect.

For technical effects of the communication apparatus according to the ninth aspect, refer to the technical effects of the communication method according to the third aspect. Details are not described herein again.

According to a tenth aspect, a communication apparatus is provided to implement the foregoing methods. The communication apparatus may be the time synchronization network element in the fourth aspect, an apparatus including the time synchronization network element, or an apparatus included in the time synchronization network element, for example, a chip. The communication apparatus includes a corresponding module, unit, or means (means) for implementing the method according to the fourth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive fifth indication information from an application network element. The fifth indication information indicates a wireless communication network to provide quality information of a first clock for a terminal device, and the first clock is a reference clock of the wireless communication system. The processing module is configured to obtain the quality information of the first clock based on the fifth indication information. The transceiver module is further configured to send the quality information of the first clock to the terminal device.

In a possible design solution, that the processing module is configured to obtain the quality information of the first clock based on the fifth indication information specifically includes: The processing module is configured to send a third message to a user plane network element based on the fifth indication information by using the transceiver module, and receive the quality information of the first clock from the user plane network element by using the transceiver module. The third message is used to request the quality information of the first clock.

In another possible design solution, that the processing module is configured to obtain the quality information of the first clock based on the fifth indication information specifically includes: The processing module is configured to send a fourth message to an operations, administration and maintenance network element based on the fifth indication information by using the transceiver module, and receive the quality information of the first clock from the operations, administration and maintenance network element by using the transceiver module. The fourth message is used to request the quality information of the first clock.

In a possible design solution, the transceiver module is further configured to receive first indication information from the application network element before receiving the fifth indication information from the application network element. The first indication information indicates to obtain the quality information of the first clock, and the quality information of the first clock is used by the application network element to determine whether to continue to apply for a time provision service for the terminal device. The processing module is configured to obtain the quality information of the first clock based on the first indication information. The transceiver module is further configured to send the quality information of the first clock to the application network element. Correspondingly, that the processing module is configured to obtain the quality information of the first clock based on the fifth indication information includes: The processing module is configured to locally obtain the quality information of the first clock based on the fifth indication information.

In a possible design solution, that the transceiver module is further configured to send the quality information of the first clock to the terminal device specifically includes: The transceiver module is further configured to send, to an access network device, information used to confirm whether the access network device has the quality information of the first clock, and receive a confirmation response from the access network device. The confirmation response indicates that the access network device does not have the quality information of the first clock. Further, the transceiver module is further configured to send the quality information of the first clock to the terminal device based on the confirmation response.

In a possible design solution, the transceiver module is further configured to receive second indication information from the terminal device. The second indication information indicates that the terminal device requests to stop time provision. The transceiver module is further configured to send third indication information to the access network device. The third indication information indicates the access network device to stop providing time for the terminal device.

Optionally, the quality information of the first clock may include one or more of the following: a quality level, crystal oscillator stability, precision, or coordinated universal time UTC traceability.

Optionally, the transceiver module in this embodiment of this application may include a receiving module and a sending module. The sending module is configured to implement a sending function of the communication apparatus according to the tenth aspect, and the receiving module is configured to implement a receiving function of the communication apparatus according to the tenth aspect.

Optionally, the communication apparatus according to the tenth aspect may further include a storage module, and the storage module stores a program or instructions. When the processing module executes the program or instructions, the communication apparatus according to the tenth aspect is enabled to perform the communication method according to the fourth aspect.

For technical effects of the communication apparatus according to the tenth aspect, refer to the technical effects of the communication method according to the fourth aspect. Details are not described herein again.

According to an eleventh aspect, a communication apparatus is provided to implement the foregoing methods. The communication apparatus may be the application network element in the fifth aspect, an apparatus including the application network element, or an apparatus included in the application network element, for example, a chip. The communication apparatus includes a corresponding module, unit, or means (means) for implementing the method according to the fifth aspect. The module, unit, or means may be implemented by hardware, software, or hardware executing corresponding software. The hardware or the software includes one or more modules or units corresponding to the foregoing functions.

In some possible designs, the communication apparatus includes a transceiver module. The transceiver module is configured to send fifth indication information to a time synchronization network element. The fifth indication information indicates a wireless communication system to provide quality information of a first clock for a terminal device, and the first clock is a reference clock of the wireless communication system.

In a possible design solution, the communication apparatus according to the eleventh aspect further includes a processing module. The transceiver module is further configured to send first indication information to the time synchronization network element before sending the fifth indication information to the time synchronization network element. The first indication information indicates to obtain the quality information of the first clock. The transceiver module is further configured to receive the quality information of the first clock from the time synchronization network element. The processing module is further configured to determine, based on the quality information of the first clock, whether to continue to apply for a time provision service for the terminal device.

In a possible design solution, that the transceiver module is further configured to send fifth indication information to a time synchronization network element specifically includes: The transceiver module is further configured to send the fifth indication information to the time synchronization network element when the processing module determines to continue to apply for the time provision service for the terminal device.

In a possible design solution, the transceiver module is further configured to receive sixth indication information from the terminal device. The sixth indication information indicates the application network element to request to stop applying for the time provision service for the terminal device.

Optionally, the quality information of the first clock may include one or more of the following: a quality level, crystal oscillator stability, precision, or coordinated universal time UTC traceability.

Optionally, the transceiver module in this embodiment of this application may include a receiving module and a sending module. The sending module is configured to implement a sending function of the communication apparatus according to the eleventh aspect, and the receiving module is configured to implement a receiving function of the communication apparatus according to the eleventh aspect.

Optionally, the communication apparatus according to the eleventh aspect may further include a storage module, and the storage module stores a program or instructions. When the processing module executes the program or instructions, the communication apparatus according to the eleventh aspect is enabled to perform the communication method according to the fifth aspect.

For technical effects of the communication apparatus according to the eleventh aspect, refer to the technical effects of the communication method according to the fifth aspect. Details are not described herein again.

According to a twelfth aspect, a communication apparatus is provided to implement the foregoing methods. The communication apparatus may be the terminal device in the sixth aspect, an apparatus including the terminal device, or an apparatus included in the terminal device, for example, a chip. The communication apparatus includes a corresponding module, unit, or means (means) for implementing the method according to the sixth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive quality information of a first clock from a time synchronization network element. The quality information of the first clock is used by the terminal device to determine whether an access network device needs to continue to provide time for the terminal device, and the first clock is a reference clock of a wireless communication system. The processing module is configured to determine, based on the quality information of the first clock, that the access network device needs to continue to provide time for the terminal device. Alternatively, the processing module is configured to determine, based on the quality information of the first clock, that the access network device needs to stop providing time for the terminal device.

In a possible design solution, the transceiver module is further configured to send second indication information to the access network device when the processing module determines that the access network device needs to stop providing time for the terminal device. The second indication information indicates that the terminal device requests to stop time provision. The transceiver module is further configured to receive fourth indication information from the access network device. The fourth indication information indicates that the access network device has stopped providing time for the terminal device.

Optionally, the fourth indication information may be carried in an RRC message.

In a possible design solution, a first network element is a mobility management network element. The transceiver module is further configured to send second indication information to the mobility management network element when the processing module determines that the access network device needs to stop providing time for the terminal device. The second indication information indicates that the terminal device requests to stop time provision.

In a possible design solution, the transceiver module is further configured to send sixth indication information to an application network element when the processing module determines that the access network device needs to stop providing time for the terminal device. The sixth indication information indicates the application network element to request to stop applying for a time provision service for the terminal device.

Optionally, the quality information of the first clock may include one or more of the following: a quality level, crystal oscillator stability, precision, or coordinated universal time UTC traceability.

Optionally, the transceiver module may include a receiving module and a sending module. The sending module is configured to implement a sending function of the communication apparatus according to the twelfth aspect, and the receiving module is configured to implement a receiving function of the communication apparatus according to the twelfth aspect.

Optionally, the communication apparatus according to the twelfth aspect may further include a storage module, and the storage module stores a program or instructions. When the processing module executes the program or instructions, the communication apparatus according to the twelfth aspect is enabled to perform the communication method according to the sixth aspect.

For technical effects of the communication apparatus according to the twelfth aspect, refer to the technical effects of the communication method according to the fifth aspect. Details are not described herein again.

According to a thirteenth aspect, a communication apparatus is provided. The communication apparatus includes a processor. The processor is coupled to a memory, and is configured to execute a computer program stored in the memory, to enable the communication apparatus to perform the method according to any one of the possible implementations of the first aspect to the sixth aspect.

In a possible design solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In this embodiment of this application, the communication apparatus according to the thirteenth aspect may be the first network element in the first aspect, the second network element in the second aspect, the terminal device in the third aspect, the time synchronization network element in the fourth aspect, the application network element in the fifth aspect, or the terminal device in the sixth aspect, may be a chip (system) or another component or assembly that can be disposed in the first network element, the second network element, the terminal device, the time synchronization network element, or the application network element, or may be an apparatus including the first network element, the second network element, the terminal device, the time synchronization network element, or the application network element.

For technical effects of the thirteenth aspect, refer to the technical effects of the method according to any one of the implementations of the first aspect to the sixth aspect. Details are not described herein again.

According to a fourteenth aspect, a communication system is provided. The communication system includes a first network element, a second network element, and a terminal device. The first network element is configured to perform the communication method according to the first aspect, the second network element is configured to perform the communication method according to the second aspect, and the terminal device is configured to perform the communication method according to the third aspect.

According to a fifteenth aspect, a communication system is provided. The communication system includes a time synchronization network element, an application network element, and a terminal device. The time synchronization network element is configured to perform the communication method according to the fourth aspect, the application network element is configured to perform the communication method according to the fifth aspect, and the terminal device is configured to perform the communication method according to the sixth aspect.

According to a sixteenth aspect, a computer-readable storage medium is provided. The computer-readable storage medium stores a computer program or instructions. When the computer program or instructions are run on a computer, the computer is enabled to perform the method according to any one of the possible implementations of the first aspect to the sixth aspect.

According to a seventeenth aspect, a computer program product is provided. The computer program product includes a computer program or instructions. When the computer program or instructions are run on a computer, the computer is enabled to perform the method according to any one of the possible implementations of the first aspect to the sixth aspect.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of a 5GS architecture according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a schematic flowchart of still another communication method according to an embodiment of this application;
FIG. 8A and FIG. 8B are a schematic flowchart of still another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

For ease of understanding, the following first describes related technologies in embodiments of this application.

Network elements in a 5G system are time-synchronized, and a clock for synchronization is referred to as a 5G clock. A 5GS clock, as a capability of a 5G network, may be exposed to an external network, to release a clock to the external network and provide, based on a requirement of the external network, a time synchronization function, namely, a time provision capability of the 5G network. However, time provision capability exposure defined in R17 may be activated and deactivated by an AF, to perform time provision for a terminal device. When the time provision is performed for the terminal device, time synchronization is first performed on clock information on an access network device and a 5GS grandmaster (grandmaster, GM). Then, the access network device sends the clock information to a terminal device in a coverage area of the access network device, to complete the time provision for the terminal device.

In a process in which the AF requests the 5G network to provide the clock information for the terminal device, a core network device may provide time for the terminal device with reference to clock subscription data of the terminal device, or may provide time for the terminal device without reference to clock subscription data of the terminal device.

However, in the foregoing time provision process, the terminal device can obtain only 5GS clock information synchronized by the access network device, and cannot determine a change of the 5GS clock information. In this case, the terminal device cannot compare the 5GS clock with another available clock (available clock), and consequently cannot select the optimal and most accurate clock as a grandmaster. Therefore, embodiments of this application provide a communication method, to resolve the problem that the terminal device cannot determine the change of 5GS clock information.

The following describes the technical solutions in this application with reference to the accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be further used.

In addition, in embodiments of this application, terms such as "an example" and "for example" are used to represent giving an example, an illustration, or a description. Any embodiment or design solution described as an "example" in this application should not be explained as being more preferable or having more advantages than another embodiment or design solution. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are consistent when differences of the terms are not emphasized. Terms "of (of)", "relevant (relevant)", and "corresponding (corresponding)" may be interchangeably used sometimes. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

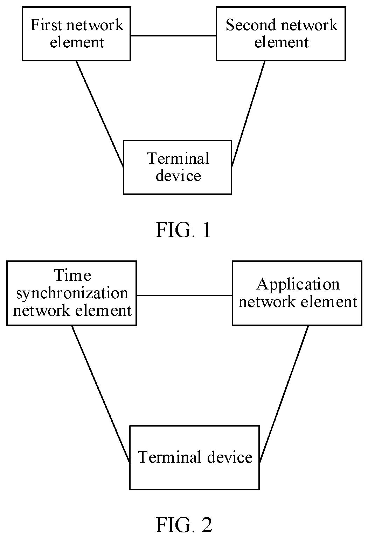

For ease of understanding embodiments of this application, a communication system shown in FIG. 1 is first used as an example to describe in detail a communication system to which embodiments of this application are applicable. For example, FIG. 1 is a diagram of an architecture of a communication system to which a communication method according to an embodiment of this application is applicable.

As shown in FIG. 1, the communication system includes a first network element, a second network element, and a terminal device. The first network element, the second network element, and the terminal device may directly communicate with each other, or may communicate with each other through forwarding by another device.

In a possible implementation, the first network element determines that quality information of a first clock needs to be obtained, and sends first indication information to the second network element. The first clock is a reference clock of a wireless communication system, and the first indication information indicates to obtain the quality information of the first clock. The second network element receives the first indication information from the first network element, obtains the quality information of the first clock based on the first indication information, and sends the quality information of the first clock to the terminal device. Then, the terminal device receives the quality information of the first clock from the first network element, and determines, based on the quality information of the first clock, whether an access network device needs to continue to provide time for the terminal device. For a specific implementation process of the solution, refer to related descriptions in the following method embodiments. Details are not described herein.

In this embodiment of this application, the first network element may be a mobility management network element, or may be the access network device shown in FIG. 1. This is not limited in this embodiment of this application.

When the first network element is the mobility management network element, the second network element may be a time synchronization network element, or may be an operations, administration and maintenance network element. In other words, when the first network element is the mobility management network element, the communication system shown in FIG. 1 may include the mobility management network element, the time synchronization network element, and the terminal device. Alternatively, the communication system shown in FIG. 1 may include the mobility management network element, the operations, administration and maintenance network element, and the terminal device. In addition, the operations, administration and maintenance network element in this embodiment of this application may be a network management system of the communication system. This is not specifically limited in this embodiment of this application.

When the first network element is the access network device, the second network element may be a time synchronization network element. In other words, when the first network element is the mobility management network element, the communication system shown in FIG. 1 includes the time synchronization network element, the access network device, and the terminal device.

For example, FIG. 2 is a diagram of an architecture of another communication system according to an embodiment of this application. The communication system includes a time synchronization network element, an application network element, and a terminal device. The time synchronization network element, the application network element, and the terminal device may directly communicate with each other, or may communicate with each other through forwarding by another device.

In a possible implementation, the application network element sends fifth indication information to the time synchronization network element. The fifth indication information indicates a wireless communication system to provide quality information of a first clock for the terminal device, and the first clock is a reference clock of the wireless communication system. The time synchronization network element receives the fifth indication information from the application network element, obtains the quality information of the first clock based on the fifth indication information, and then sends the quality information of the first clock to the terminal device. The terminal device receives the quality information of the first clock from the time synchronization network element, and determines, based on the quality information of the first clock, whether an access network device needs to continue to provide time for the terminal device. For a specific implementation process of the solution, refer to related descriptions in the following method embodiments. Details are not described herein.

Although not shown, the communication system shown in FIG. 1 and/or FIG. 2 may further include another network element or device such as a user plane network element and a network exposure network element. This is not specifically limited in this embodiment of this application.

The mobility management network element in this embodiment of this application is mainly configured for attachment, mobility management, and tracking area update procedures of the terminal device in a mobile network. The mobility management network element terminates a non-access stratum (non-access stratum, NAS) message, completes registration management, connection management, reachability management, allocation of a tracking area list (tracking area list, TA list), mobility management, and the like, and transparently routes a session management (session management, SM) message to a session management network element. In a 5G communication system, the mobility management network element may be an AMF network element. In a future communication system such as a 6G communication system, the mobility management network element may still be the AMF network element or have another name. This is not limited in this embodiment of this application.

The time synchronization network element in this embodiment of this application is mainly configured to support a time synchronization function. The time synchronization network element determines and manages, by exchanging port management information and user plane node management information, a precision time protocol (precision time protocol, PTP) function supported by a device-side time sensitive networking translator (device-side time sensitive networking translator, DS-TT) and a network-side time sensitive networking translator (network-side time sensitive networking translator, NW-TT). In the 5G communication system, the time synchronization network element may be a TSCTSF network element. In the future communication system such as the 6G communication system, the time synchronization network element may still be the TSCTSF network element or have another name. This is not limited in this embodiment of this application.

The application network element in this embodiment of this application is a function network element that can provide various business services. The application network element may be a third-party application control platform, or may be a device of an operator. The application network element may provide a service for a plurality of application servers, can interact with a core network directly or through a network exposure function network element, and can interact with a policy management framework to perform policy management. In the 5G communication system, the application network element may be an AF network element. In the future communication system such as the 6G communication system, the application network element may still be the AF network element or have another name. This is not limited in this embodiment of this application.

In this embodiment of this application, the access network device is a device that is located on a network side of the communication system and that has a wireless transceiver function, or a chip or a chip system that may be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission reception point, TRP; or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in a 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

In this embodiment of this application, the terminal device is a terminal that accesses the communication system and that has a wireless transceiver function, or the terminal device is a chip or a chip system that may be disposed in the terminal. The terminal device may also be referred to as user equipment (user equipment, UE), a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet (Pad), a computer that has a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, an RSU that has a terminal function, or the like. The terminal device in this application may alternatively be an in-vehicle module, an in-vehicle assembly, an in-vehicle component, an in-vehicle chip, or an in-vehicle unit that is built in a vehicle as one or more components or units. The vehicle may implement the communication method in this application by using the in-vehicle module, the in-vehicle assembly, the in-vehicle component, the in-vehicle chip, or the in-vehicle unit that is built in the vehicle.

It should be noted that the communication system provided in this embodiment of this application is applicable to the foregoing various communication systems. A 5G mobile communication system is used as an example. A network element or an entity corresponding to the mobility management network element may be the AMF network element in the 5G mobile communication system, a network element or an entity corresponding to the time synchronization network element may be the TSCTSF network element in the 5G mobile communication system, and a network element or an entity corresponding to the application network element may be the AF network element in the 5G mobile communication system. This is not specifically limited in this embodiment of this application.

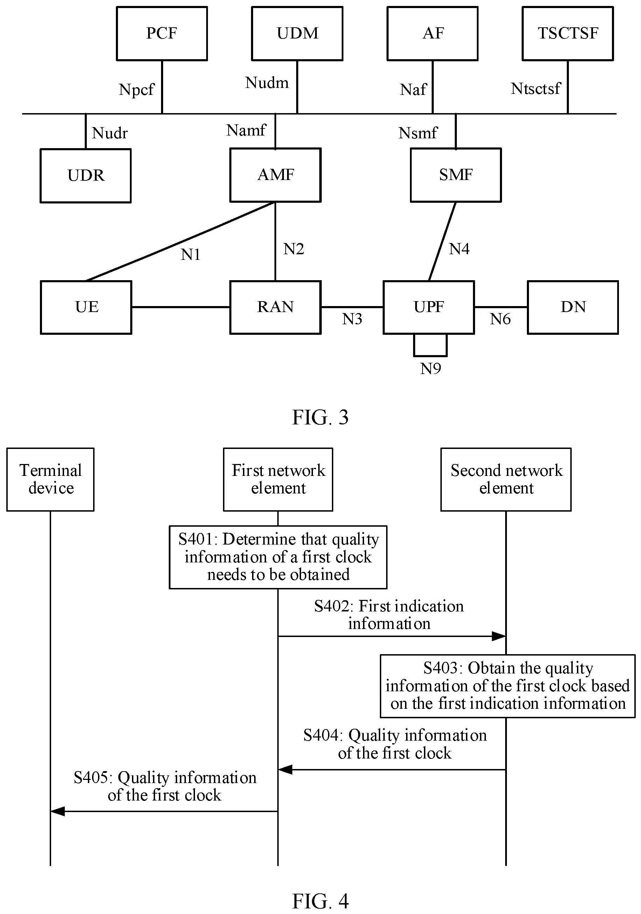

For example, FIG. 3 is a diagram of a 5GS architecture according to an embodiment of this application. As shown in FIG. 3, a communication system includes UE, an access network (access network, AN), and a core network (core network, CN).

The AN is configured to implement an access-related function, may provide a network access function for an authorized user in a specific area, and can determine transmission links of different quality based on a user level, a service requirement, and the like, to perform transmission of user data. The AN forwards a control signal and the user data between the UE and the CN. The AN may include an access network device, and the access network device may also be referred to as a radio access network (radio access network, RAN) device. The CN is responsible for maintaining subscription data of a mobile network, and provides session management, mobility management, policy management, security authentication, and other functions for the UE. The CN mainly includes the following network elements: an AMF, a PCF, a UDM, a TSCTSF, a NEF, and an AF.

As shown in FIG. 3, the UE communicates with the AMF through a next generation network (next generation, N) 1 interface (N1 for short). The RAN communicates with the AMF through an N2 interface (N2 for short). The RAN communicates with a user plane function (user plane function, UPF) through an N3 interface (N3 for short). The UPF communicates with a session management function (session management function, SMF) through an N4 interface (N4 for short). The UPF communicates with a data network (data network, DN) through an N6 interface (N6 for short). The UPF communicates with the UPF through an N9 interface (N9 for short).

Although not shown in FIG. 3, it may be understood that the AMF network element may communicate with the SMF network element through an N11 interface (N11 for short). The AMF network element communicates with the PCF network element through an N15 interface (N15 for short). The SMF network element communicates with the PCF network element through an N7 interface (N7 for short).

In addition, it should be noted that network elements such as the AF, the AMF, the SMF, the policy control function (policy control function, PCF), the unified data management (unified data management, UDM), a unified data repository (unified data repository, UDR), and the TSCTSF shown in FIG. 3 may alternatively interact with each other through a service-oriented interface. For example, an external service-oriented interface provided by the AF may be Naf. An external service-oriented interface provided by the AMF may be Namf. An external service-oriented interface provided by the SMF may be Nsmf. An external service-oriented interface provided by the PCF may be Npcf. An external service-oriented interface provided by the UDM may be Nudm. An external service-oriented interface provided by the UDR may be Nudr. An external service-oriented interface provided by the TSCTSF may be Ntsctsf.

It should be noted that, the solutions in embodiments of this application may also be applied to another communication system, and a corresponding name may also be replaced with a name of a corresponding function in the another communication system.

It should be understood that FIG. 1 and FIG. 2 are only simplified diagrams of examples for ease of understanding. The communication system may further include another network device and/or another terminal device, which are/is not shown in FIG. 1 and FIG. 2.

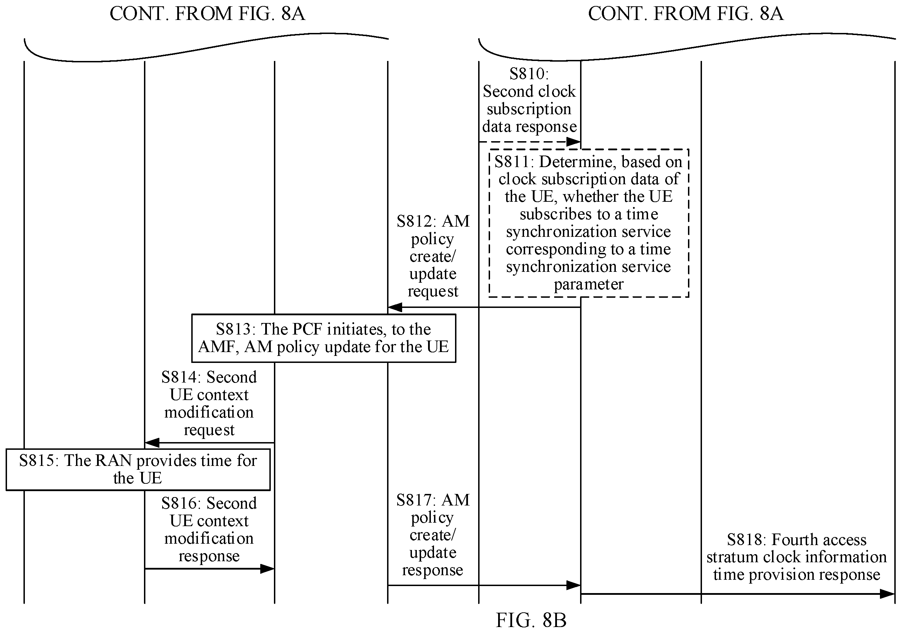

The following describes in detail a communication method provided in embodiments of this application with reference to FIG. 4 to FIG. 8A and FIG. 8B.

For example, FIG. 4 is a schematic flowchart of a communication method according to an embodiment of this application. The communication method is applicable to communication between the first network element, the second network element, and the terminal device in the communication system shown in the foregoing FIG. 1. The first network element may be an access network device or a mobility management network element, and the second network element may be a time synchronization network element or an operations, administration and maintenance network element.

As shown in FIG. 4, the communication method may include the following steps.

S401: A first network element determines that quality information of a first clock needs to be obtained.

The first clock is a reference clock of a wireless communication system.

In a possible design solution, the first network element is a mobility management network element, and the mobility management network element may be, for example, the AMF in the foregoing FIG. 3. In this scenario, S401 may include the following step 1-1 to step 1-3.

Step 1-1: The first network element sends, to an access network device, information used to confirm whether the access network device has the quality information of the first clock. The information used to confirm whether the access network device has the quality information of the first clock is used to confirm whether the quality information of the first clock is deployed on the access network device.

Step 1-2: The first network element receives a confirmation response from the access network device. The confirmation response indicates that the access network device does not have the quality information of the first clock.

Step 1-3: The first network element determines, based on the confirmation response, that the quality information of the first clock needs to be obtained.

It may be understood that when the confirmation response indicates that the access network device has the quality information of the first clock, the first network element may directly indicate the access network device to send the quality information of the first clock to a terminal device, and the first network element does not need to obtain the quality information of the first clock.

For a specific implementation process of the foregoing steps 1-1 to 1-3, refer to related descriptions in the following S505 and S506. Details are not described herein.

In another possible design solution, a second network element is an access network device, and the access network device may be, for example, the RAN in the foregoing FIG. 3. In this scenario, S401 may include the following step 2-1 to step 2-3.

Step 2-1: The first network element receives a time provision request from a terminal device.

The time provision request is used to request the access network device to provide time for the terminal device. The time provision request may include an identifier of the terminal device, a time synchronization service parameter, and first indication information. The time synchronization service parameter indicates a time provision requirement of the terminal device, and the first indication information indicates to obtain the quality information of the first clock.

Step 2-2: The first network element determines, based on the first indication information, whether the first network element has the quality information of the first clock.

For example, after receiving the time provision request, the first network element may provide information of the first clock for the terminal device based on the time synchronization service parameter in the time provision request, and confirm, based on the first indication information, whether the quality information of the first clock is locally deployed on the first network element.

Steps 2-3: When determining that the first network element does not have the quality information of the first clock, the first network element determines that the quality information of the first clock needs to be obtained.

For example, the first network element determines that the quality information of the first clock is not locally deployed on the first network element. In this way, the first network element needs to request the quality information of the first clock from the second network element.

For a specific implementation process of the foregoing steps 2-1 to 2-3, refer to related descriptions in the following S602. Details are not described herein.

S402: The first network element sends the first indication information to the second network element. Correspondingly, the second network element receives the first indication information from the first network element.

The first indication information indicates to obtain the quality information of the first clock.

In a possible design solution, the second network element is a time synchronization network element, and the time synchronization network element may be, for example, the TSCTSF in the foregoing FIG. 3. In other words, regardless of whether the first network element is the access network device or the mobility management network element, the first network element may request to obtain the quality information of the first clock from the time synchronization network element. It may be understood that the access network device may forward the first indication information to the time synchronization network element through the mobility management network element.

In addition, when the first network element is the mobility management network element, the second network element may alternatively be an operations, administration and maintenance network element, and the operations, administration and maintenance network element may be, for example, an OAM.

S403: The second network element obtains the quality information of the first clock based on the first indication information.

When the second network element is the time synchronization network element:
In a possible case, the second network element may obtain the quality information of the first clock from a user plane network element. The user plane network element may be, for example, the UPF in the foregoing FIG. 3. For example, S403 may include the following step 3-1 and step 3-2.

Step 3-1: The second network element sends a first message to the user plane network element based on the first indication information. The first message is used to request the quality information of the first clock.

Step 3-2: The second network element receives the quality information of the first clock from the user plane network element.

In another possible case, the second network element may obtain the quality information of the first clock from an operations, administration and maintenance network element. The operations, administration and maintenance network element may be, for example, an OAM. For example, S403 may include the following step 4-1 and step 4-2.

Step 4-1: The second network element sends a second message to the operations, administration and maintenance network element based on the first indication information. The second message is used to request the quality information of the first clock.

Step 4-2: The second network element receives the quality information of the first clock from the operations, administration and maintenance network element.

In still another possible case, if the quality information of the first clock is deployed on the second network element, the second network element may locally obtain the quality information of the first clock.

For example, when the second network element is the operations, administration and maintenance network element, the quality information of the first clock is locally deployed on the operations, administration and maintenance network element. Then, after receiving the first indication information, the operations, administration and maintenance network element may directly feed back the quality information of the first clock to the first network element.

For a specific implementation process of S403, refer to related descriptions in the following S508 and S604. Details are not described herein.

S404: The second network element sends the quality information of the first clock to the first network element. Correspondingly, the first network element receives the quality information of the first clock from the second network element.

It may be understood that, when the first network element is the access network device, the second network element may forward the quality information of the first clock to the access network device through the mobility management network element.

S405: The first network element sends the quality information of the first clock to the terminal device. Correspondingly, the terminal device receives the quality information of the first clock from a first network element.

When the first network element is the mobility management network element, the first network element may send a NAS message to the terminal device. The NAS message may include the quality information of the first clock. Alternatively, the first network element may first send the quality information of the first clock to the access network device, and then the access network device forwards the quality information of the first clock to the terminal device.

When the first network element is the access network device, the first network element may send an RRC message or a SIB message to the terminal device. The RRC message or the SIB message includes the quality information of the first clock.

For a specific implementation process of S405, refer to related descriptions in the following S509 to S511 and S605 to S607. Details are not described herein.

Then, after receiving the quality information of the first clock, the terminal device may also determine, based on the quality information of the first clock, whether the access network device needs to continue to provide time for the terminal device.

When the terminal device determines that the access network device needs to stop providing time for the terminal device:
In a possible design solution, the terminal device sends second indication information to the access network device. The second indication information indicates that the terminal device requests to stop time provision. Then, the terminal device receives fourth indication information from the access network device. The fourth indication information indicates that the access network device has stopped providing time for the terminal device.

In another possible design solution, the terminal device may send second indication information to the mobility management network element, and the mobility management network element indicates the access network device to stop providing time for the terminal device. In this way, the terminal device receives fourth indication information from the access network device, and the fourth indication information notifies the terminal device that the access network device no longer provides the information of the first clock for the terminal device. In this case, the mobility management network element has a capability of determining to stop time provision.

It may be understood that, in this case, the second indication information may be forwarded by the access network device to the mobility management network element.

In still another possible design solution, the terminal device may send second indication information to the time synchronization network element, and the time synchronization network element indicates the access network device to stop providing time for the terminal device. In this way, the terminal device receives fourth indication information from the access network device, and the fourth indication information notifies the terminal device that the access network device no longer provides the information of the first clock for the terminal device. In this case, the time synchronization network element also has a capability of determining to stop time provision. It may be understood that, in this case, the second indication information may be sequentially forwarded by the access network device and the mobility management network element to the time synchronization network element.

For a process in which the terminal device determines to stop the time provision, refer to related descriptions in the following S512 to S518. Details are not described herein.

Based on the communication method shown in FIG. 4, in a process of providing time for the terminal device, the first network element may trigger, by using the first indication information, the second network element to obtain the quality information of the first clock, so that the first network element can obtain the quality information of the first clock from the second network element and provide the quality information of the first clock for the terminal device. Then, after obtaining the quality information of the first clock, for example, the terminal device may compare the first clock with another available clock based on the quality information of the first clock, to select a better and more accurate clock as a grandmaster.

For ease of understanding, the following describes in detail, with reference to a 5GS and different scenarios, a specific implementation process of the communication method shown in FIG. 4.

For example, an example in which the communication method provided in this embodiment of this application is applied to the 5GS architecture shown in FIG. 3, the terminal device is the UE, the access network device is the RAN, the mobility management network element is the AMF, and the time synchronization network element is the TSCTSF is used to describe the communication method provided in this embodiment of this application in detail. The first clock is a reference clock in the 5GS, and the quality information of the first clock is 5GS clock quality information.

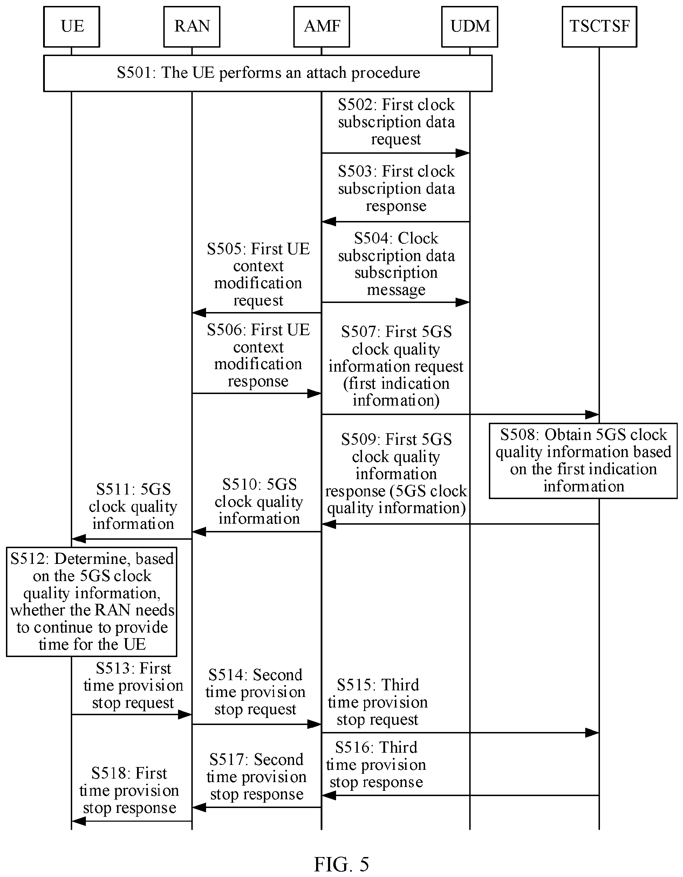

For example, FIG. 5 is a schematic flowchart of another communication method according to an embodiment of this application. The communication method may be performed during registration of UE, and an AMF initiates a time provision request for the UE. In this scenario, a first network element is the AMF, and a second network element is a TSCTSF.

As shown in FIG. 5, the communication method may include the following steps.

S501: The UE performs an attach procedure.

The attach procedure may be performed between the UE, a RAN, the AMF, and a UDM. The attach procedure may include random access (RRC connection setup), a registration and authentication procedure, or the like of the UE. For a specific process of S501, refer to an existing implementation process. Details are not described herein again.

S502: The AMF sends a first clock subscription data request to the UDM. Correspondingly, the UDM receives the first clock subscription data request from the AMF.

The first clock subscription data request (Nudm_SDM_Get_Req) carries an identifier of the UE, and is used to request to obtain clock subscription data of the UE. The clock subscription data of the UE may include one or more of a time synchronization type supported by the UE, a time synchronization error allowed by the UE, or clock precision allowed by the UE. The time synchronization type may be access stratum time synchronization and/or generalized precision time protocol (generalized precision time protocol, gPTP) time synchronization. The time synchronization error may be a requirement on a time synchronization error (error budget) during time provision (which may be referred to as a time provision error for short), and the error budget indicates a maximum error of time synchronization in a core network-RAN-UE time provision process. For example, the UE supports an access stratum time synchronization time provision service with clock precision of 0.01s and a time provision error not exceeding 0.05s.

For example, during configuration of the attach procedure, the AMF may send the first clock subscription data request to the UDM to obtain the clock subscription data of the UE, to trigger the time provision for the UE.

S503: The UDM sends a first clock subscription data response to the AMF. Correspondingly, the AMF receives the first clock subscription data response from the UDM.

The first clock subscription data response (Nudm_SDM_Get_Resp) carries the clock subscription data of the UE.

For example, the UDM may query for the clock subscription data of the UE based on the identifier of the UE in the received first clock subscription data request, and feed back the clock subscription data of the UE to the AMF.

S504: The AMF sends a clock subscription data subscription message to the UDM. Correspondingly, the UDM receives the clock subscription data subscription message from the AMF.

The clock subscription data subscription message (Nudm_ SDM Subscribe) is used to subscribe to a clock subscription data update notification of the UE. In other words, when the clock subscription data of the UE changes, the UDM sends updated clock subscription data to the AMF based on a subscription requirement of the AMF.

It may be understood that S504 is an optional step. For example, the AMF may obtain the updated clock subscription data of the UE by using the foregoing S502 and S503 instead of subscribing to the clock subscription data update notification from the UDM.

S505: The AMF sends a first UE context modification request to the RAN. Correspondingly, the RAN receives the first UE context modification request from the AMF.

The first UE context modification request (UE Context Modification req) carries information used to determine whether the RAN has 5GS clock quality information, a time provision indication, and a requirement on providing time for the UE. The time provision indication is used to activate a time provision capability of the RAN, and the requirement on providing time for the UE may include a RAN air interface time provision error (Uu error budget), a time provision time synchronization type, time provision clock precision, and the like.

For example, after receiving the clock subscription data of the UE, the AMF may trigger the RAN to provide time for the UE. For example, the AMF may obtain the Uu error budget through calculation based on the time synchronization error (namely, the error budget) allowed by the UE in the clock subscription data of the UE, determine the RAN that provides time for the UE, and then send, to the RAN by using the UE context modification request, the time provision indication, the Uu error budget, and the information used to determine whether the RAN has the 5GS clock quality information. The AMF may confirm, with the RAN, whether the 5GS clock quality information is deployed on the RAN when the AMF activates the time provision capability of the RAN and indicates the RAN to provide time for the UE at an error not exceeding the Uu error budget.

S506: The RAN sends a first UE context modification response to the AMF. Correspondingly, the AMF receives the first UE context modification response from the RAN.

In a possible design solution, if the 5GS clock quality information is locally deployed on the RAN, the first UE context modification response indicates that the RAN has the 5GS clock quality information, and the following S507 to S509 may not be performed. Instead, the AMF may indicate the RAN to provide the 5GS clock quality information for the UE.

In another possible design solution, if the 5GS clock quality information is not locally deployed on the RAN, the first UE context modification response indicates that the RAN does not have the 5GS clock quality information, and the following S507 to S509 may be further performed.

S507: The AMF sends a first 5GS clock quality information request to the TSCTSF. Correspondingly, the TSCTSF receives the first 5GS clock quality information request from the AMF.

The first 5GS clock quality information request (5GS clock quality info Req) is used to request to obtain the 5GS clock quality information, and the first 5GS clock quality information request carries first indication information, an identifier of the AMF, and/or an identifier of the RAN. The first indication information indicates to obtain the 5GS clock quality information.

S508: The TSCTSF obtains the 5GS clock quality information based on the first indication information.

For example, after receiving the first 5GS clock quality information request, the TSCTSF confirms whether the 5GS clock quality information is locally deployed on the TSCTSF. If the 5GS clock quality information is deployed on the TSCTSF, the TSCTSF feeds back the 5GS clock quality information to the AMF based on the first indication information.

In a possible design solution, if the 5GS clock quality information is not deployed on the TSCTSF, the TSCTSF may obtain the 5GS clock quality information from a UPF. For example, S508 may include the following step 5-1 and step 5-2.

Step 5-1: The TSCTSF sends a second 5GS clock quality information request to the UPF.

The second 5GS clock quality information request is used to request the 5GS clock quality information, and the second 5GS clock quality information request may carry an identifier of the TSCTSF and the first indication information.

It may be understood that the TSCTSF may alternatively send the second 5GS clock quality information request to the UPF through an SMF.

Step 5-2: The TSCTSF receives a second 5GS clock quality information response from the UPF.

The second 5GS clock quality information response carries the 5GS clock quality information.

In another possible design solution, if the 5GS clock quality information is not deployed on the TSCTSF, the TSCTSF may alternatively obtain the 5GS clock quality information from an OAM. For example, S508 may include the following step 6-1 and step 6-2.

Step 6-1: The TSCTSF sends a third 5GS clock quality information request to the OAM.

The third 5GS clock quality information request is used to request the 5GS clock quality information, and the third 5GS clock quality information request may carry an identifier of the TSCTSF and the first indication information.

Step 6-2: The TSCTSF receives a third 5GS clock quality information response from the OAM.

The third 5GS clock quality information response carries the 5GS clock quality information.

S509: The TSCTSF sends a first 5GS clock quality information response to the AMF. Correspondingly, the AMF receives the first 5GS clock quality information response sent by the TSCTSF.

The first 5GS clock quality information response (5GS clock quality info Resp) carries the 5GS clock quality information.

It may be understood that in this embodiment of this application, the UPF and the OAM both are core network devices or network elements on which the 5GS clock quality information is locally deployed.

It should be noted that if 5GS clock quality information to be obtained is indicated by the first indication information, in the foregoing response (for example, the first 5GS clock quality information response, the second 5GS clock quality information response, or the third 5GS clock quality information response), only a corresponding requested 5GS clock quality parameter may be returned. For example, if a quality level and precision of a 5GS clock are requested to be obtained, the TSCTSF, OAM, or UPF may return only the quality level and precision of the 5GS clock. It may be understood that, in the foregoing response, all 5GS clock quality parameters configured on the OAM, UPF, or TSCTSF may alternatively be returned. In addition, if the 5GS clock quality information that the first indication information indicates to obtain is a default value, in the foregoing response, some or all 5GS clock quality information configured on the OAM, UPF, or TSCTSF may alternatively be returned. This is not limited in this embodiment of this application.

It should be noted that the foregoing S507 to S509 may alternatively be replaced with that the AMF sends a first 5GS clock quality information request to an OAM, and after receiving the first 5GS clock quality information request, the OAM feeds back the 5GS clock quality information to the AMF. In other words, the AMF may directly apply to the OAM to obtain the 5GS clock quality information.

S510: The AMF sends the 5GS clock quality information to the RAN. Correspondingly, the RAN receives the 5GS clock quality information from the AMF.

It may be understood that S510 is an optional step. For example, when the AMF sends the 5GS clock quality information to the UE by using a NAS message, the AMF may not send the 5GS clock quality information to the RAN. In this case, the RAN provides time for the UE, but may not provide 5GS clock information for the UE.

S511: The RAN sends the 5GS clock quality information to the UE. Correspondingly, the UE receives the 5GS clock quality information from the RAN.

For example, after receiving the 5GS clock quality information, the RAN may perform the time provision with the 5GS clock quality information for the UE. In other words, the RAN further provides the 5GS clock quality information for the UE when providing the 5GS clock information for the UE.

It may be understood that, after receiving the time provision indication sent by the AMF, the RAN may provide the 5GS clock information for the UE, and initiate the time provision for the UE without waiting for obtaining the 5GS clock quality information. In other words, the RAN may provide the 5GS clock quality information for the UE after providing time for the UE.

Then, after receiving the 5GS clock quality information, the UE may determine, based on the 5GS clock quality information, whether the RAN needs to continue to provide time for the UE. For example, the following S512 to S518 are performed.

S512: The UE determines, based on the 5GS clock quality information, whether the RAN needs to continue to provide time for the UE.

For example, the UE may determine, based on the 5GS clock quality information and clock quality information of another available clock deployed on the UE, whether the RAN needs to continue to provide time for the UE. In other words, the UE may determine, based on the 5GS clock quality information, whether to continue to use the 5GS clock as a grandmaster.

For example, if the 5GS clock quality information includes the quality level of the 5GS clock, the UE may determine whether the quality level of the 5GS clock is degraded, and whether a changed quality level is higher than a quality level of the another available clock. If the quality level of the 5GS clock is lower than the quality level of the another available clock, the UE determines that the RAN does not need to continue to provide time for the UE, and continues to perform the following step S513. If the quality level of the 5GS clock is higher than the quality level of the another available clock, the RAN continues to provide the 5GS clock information for the UE.

For another example, the 5GS clock quality information includes crystal oscillator stability of the 5GS clock. If the crystal oscillator stability of the 5GS clock is worse than crystal oscillator stability of the another available clock, the UE determines that the RAN does not need to continue to provide time for the UE, and continues to perform the following step S513. If the crystal oscillator stability of the 5GS clock is better than crystal oscillator stability of the another available clock, the RAN continues to provide the 5GS clock information for the UE.

S513: The UE sends a first time provision stop request to the RAN. Correspondingly, the RAN receives the first time provision stop request from the UE.

The first time provision stop request is used by the UE to request to stop the time provision, and the first time provision stop request carries second indication information and the identifier of the UE. The second indication information indicates that the UE requests to stop the time provision. The second indication information may also be referred to as a time provision stop indication. This is not limited in this embodiment of this application.

It may be understood that the first time provision stop request may be an RRC message, for example, RRC_ASTI_Update_Req.

In a possible design solution, when the RAN has a capability of determining whether to stop providing time for the UE, the RAN may directly stop providing time for the UE based on the second indication information, for example, disable a capability of providing time for the UE. Then, the following S518 is performed, and the following S514 to S517 are not performed.

In another possible design solution, when the RAN does not have a capability of determining whether to stop providing time for the UE, the AMF may determine whether the RAN stops providing time for the UE. For example, the following S514, S517, and S518 are performed, and the following S515 and S516 are not performed.

In still another possible design solution, when the RAN does not have a capability of determining whether to stop providing time for the UE, the TSCTSF may alternatively determine whether the RAN stops providing time for the UE. For example, the following S514 to S518 are performed.

S514: The RAN sends a second time provision stop request to the AMF. Correspondingly, the AMF receives the second time provision stop request from the RAN.

The second time provision stop request is used by the UE to request to stop the time provision, and the second time provision stop request carries the second indication information and the identifier of the UE.

When the RAN does not have the capability of determining whether to stop the time provision, after receiving the first time provision stop request sent by the UE, the RAN forwards the second indication information to the AMF by using the second time provision stop request. The AMF may determine, based on the second indication information, whether to stop the time provision. Alternatively, the AMF may determine, by using the TSCTSF, whether to stop the time provision. For example, the following S515 to S518 are performed.

S515: The AMF sends a third time provision stop request to the TSCTSF. Correspondingly, the TSCTSF receives the third time provision stop request from the AMF.

The third time provision stop request also carries the second indication information and the identifier of the UE.

S516: The TSCTSF sends a third time provision stop response to the AMF. Correspondingly, the AMF receives the third time provision stop response from the TSCTSF.

The third time provision stop response carries third indication information, and the third indication information indicates the RAN to stop providing time for the UE.

S517: The AMF sends a second time provision stop response to the RAN. Correspondingly, the AMF receives the second time provision stop response from the RAN.

The second time provision stop response carries the third indication information.

S518: The RAN sends a first time provision stop response to the UE. Correspondingly, the UE receives the first time provision stop response from the RAN.

The first time provision stop response carries fourth indication information, and the fourth indication information indicates that the RAN has stopped providing time for the UE.

It should be noted that the UE obtains the 5GS clock quality information based on the foregoing S501 to S511. The 5GS clock quality information may not only be used for the clock comparison performed in the foregoing S512 to S518, but also be used to determine whether a status of the 5GS clock changes. Alternatively, the 5GS clock quality information may be used to provide the 5GS clock quality information during time provision for an associated device. This is not specifically limited in this embodiment of this application.

Based on the communication method shown in FIG. 5, in the UE registration process, the AMF may initiate a time provision procedure for the UE, and indicate to obtain the 5GS clock quality information in the time provision procedure, to provide the 5GS clock quality information for the UE.

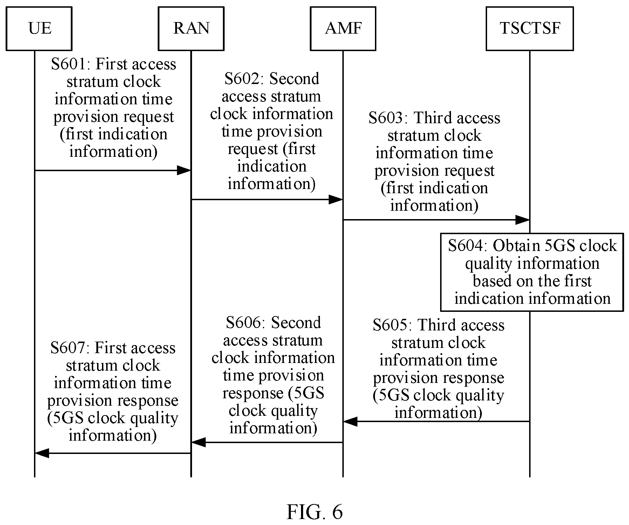

For example, FIG. 6 is a schematic flowchart of still another communication method according to an embodiment of this application. In the communication method, UE may autonomously request a time provision service. In this scenario, a first network element is a RAN, and a second network element is a TSCTSF.

As shown in FIG. 6, the communication method may include the following steps.

S601: The UE sends a first access stratum clock information time provision request to the RAN. Correspondingly, the RAN receives the first access stratum clock information time provision request from the UE.

The first access stratum clock information time provision request (RRC_ASTI_Create_Req) is used to request the RAN to provide time for the UE. The first access stratum clock information time provision request may carry an identifier of the UE, a time synchronization service parameter, and first indication information. The time synchronization service parameter indicates a requirement of the UE on the requested time provision service, and the time synchronization service parameter may include one or more of a requested time synchronization type, a requirement on clock information, and a requirement on time provision information. The time synchronization type may be access stratum time synchronization and/or gPTP time synchronization. The requirement on the clock information may be a requirement on precision of the clock information. The requirement on the time provision information may be a requirement on a RAN air interface time provision error (Uu error budget), and the Uu error budget indicates a maximum error of time synchronization in a RAN-UE time provision process. For example, the UE requests an access stratum time synchronization time provision service with clock information precision of 0.01s and a RAN air interface time provision error not exceeding 0.05s. The first indication information indicates to obtain 5GS clock quality information.

In a possible case, after receiving the first access stratum clock information time provision request, the RAN may provide 5GS clock information for the UE based on a time provision requirement requested in the first access stratum clock information time provision request, and send obtained 5GS clock information to the UE. In another possible case, after receiving the first access stratum clock information time provision request, the RAN temporarily does not provide 5GS clock information for the UE, but provides time for the UE after obtaining the 5GS clock quality information, in other words, provides the 5GS clock information for the UE. For example, after the following S602 to S606 are performed, the RAN provides the 5GS clock information and the 5GS clock quality information for the UE in S607.

S602: The RAN sends a second access stratum clock information time provision request to an AMF. Correspondingly, the AMF receives the second access stratum clock information time provision request from the RAN.

For example, after receiving the first access stratum clock information time provision request, the RAN may first confirm, based on the first indication information, whether the 5GS clock quality information is locally deployed on the RAN. If the 5GS clock quality information is not locally deployed on the RAN, the RAN sends the second access stratum clock information time provision request (N2 message_ASTI_Create_Req) to the AMF, to request to obtain the 5GS clock quality information. The second access stratum clock information time provision request carries an identifier of the RAN and the first indication information.

S603: The AMF sends a third access stratum clock information time provision request to the TSCTSF. Correspondingly, the TSCTSF receives the third access stratum clock information time provision request from the AMF.

For example, after receiving the second access stratum clock information time provision request, the AMF sends the third access stratum clock information time provision request (Ntsctsf_ASTI_Create_Req) to the TSCTSF based on the first indication information, to request to obtain the 5GS clock quality information. The third access stratum clock information time provision request also carries the identifier of the RAN and the first indication information.

S604: The TSCTSF obtains the 5GS clock quality information based on the first indication information.

For example, the TSCTSF receives the third access stratum clock information time provision request, and obtains the 5GS clock quality information based on the first indication information. For a specific implementation process of S604, refer to the related descriptions in the foregoing S508. Details are not described herein again.

S605: The TSCTSF sends a third access stratum clock information time provision response to the AMF. Correspondingly, the AMF receives the third access stratum clock information time provision response from the TSCTSF.

The third access stratum clock information time provision response (Ntsetsf_ASTI_Create_Resp) carries the 5GS clock quality information.

It should be noted that the foregoing S603 to S605 may alternatively be replaced with: The AMF sends the third access stratum clock information time provision request to an OAM, and after receiving the third access stratum clock information time provision request, the OAM feeds back the 5GS clock quality information to the AMF based on the first indication information.

S606: The AMF sends a second access stratum clock information time provision response to the RAN. Correspondingly, the RAN receives the second access stratum clock information time provision response from the AMF.

The second access stratum clock information time provision response (N2 message_ASTI_Create_Resp) carries the 5GS clock quality information.

S607: The RAN sends a first access stratum clock information time provision response to the UE. Correspondingly, the UE receives the first access stratum clock information time provision response from the RAN.

The first access stratum clock information time provision response (RRC_ASTI_Create_Resp) may carry the 5GS clock quality information.

Then, after receiving the 5GS clock quality information, the UE may alternatively determine, based on the 5GS clock quality information, whether the RAN needs to continue to provide time for the UE. For details, refer to the related descriptions in the foregoing S512 to S518. Details are not described herein again.

Based on the communication method shown in FIG. 6, the UE may autonomously request the time provision service. When confirming that the 5GS clock quality information is not locally deployed on the RAN, the RAN requests the TSCTSF to obtain the 5GS clock quality information, to provide the 5GS clock quality information for the UE. Further, the UE may determine a change of the 5GS clock information based on the 5GS clock quality information. When the 5GS clock information is not as good as local available clock information of the UE, a better clock may be selected as a grandmaster, and a 5GS does not need to continue to provide time for the UE. This improves accuracy of clock information of the UE.

FIG. 5 and FIG. 6 describe in detail implementation processes of the communication method shown in FIG. 4 in a UE registration scenario and a scenario in which the UE autonomously requests the time provision. An embodiment of this application further provides a communication method, to provide quality information of a first clock for a terminal device.

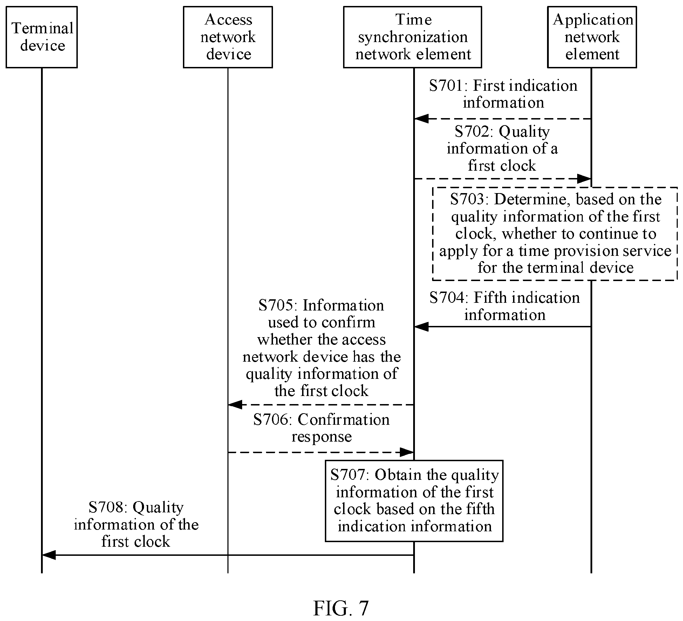

For example, FIG. 7 is a schematic flowchart of another communication method according to an embodiment of this application. The communication method is applicable to communication between the application network element, the time synchronization network element, and the terminal device in the communication system shown in the foregoing FIG. 2. As shown in FIG. 7, the communication method may include the following steps.

S701: An application network element sends first indication information to a time synchronization network element. Correspondingly, the time synchronization network element receives the first indication information from the application network element.

The first indication information indicates to obtain quality information of a first clock. The first clock is a reference clock of a wireless communication system. The quality information of the first clock may include one or more of a quality level, crystal oscillator stability, precision, or UTC traceability.

For example, before applying for a time provision service for a terminal device, the application network element may first send the first indication information to the time synchronization network element, to obtain the quality information of the first clock. The quality information of the first clock is used by the application network element to determine whether to continue to apply for the time provision service for the terminal device.

It may be understood that the first indication information may indicate which quality parameter information of the first clock is specifically requested. For example, the first indication information indicates to request to obtain the quality level and crystal oscillator stability of the first clock. The first indication information may or may not indicate which quality parameter information of the first clock is specifically requested. In this case, it may be considered that the first indication information is used to request to obtain all quality parameter information of the first clock. This is not limited in this embodiment of this application.

For a specific implementation process of S701, refer to related descriptions in the following S801 and S802. Details are not described herein.

S702: The time synchronization network element sends the quality information of the first clock to the application network element. Correspondingly, the application network element receives the quality information of the first clock from the time synchronization network element.

For example, after receiving the first indication information, the time synchronization network element may first determine whether the quality information of the first clock is locally deployed on the time synchronization network element. If the time synchronization network element determines that the quality information of the first clock is locally deployed on the time synchronization network element, the time synchronization network element provides the quality information of the first clock for the application network element based on specific content requested by the first indication information. If the time synchronization network element determines that the quality information of the first clock is not deployed on the time synchronization network element, the time synchronization network element may request the quality information of the first clock from a user plane network element or an operations, administration and maintenance network element based on the first indication information. For a specific implementation process, refer to the related descriptions in the foregoing S508 or S604. Details are not described herein again.

S703: The application network element determines, based on the quality information of the first clock, whether to continue to apply for the time provision service for the terminal device.

For example, after receiving the quality information of the first clock fed back by the time synchronization network element, the application network element may compare the quality information of the first clock with quality information of another available clock deployed on the application network element, to determine whether the first clock is more suitable than the another available clock deployed on the application network element to be used as a grandmaster to provide clock information for the terminal device, to determine whether to continue to apply for the time provision service for the terminal device.

In a possible design solution, when the application network element determines to continue to apply for the time provision service for the terminal device, the following S704 may be performed.

In another possible design solution, when the application network element determines not to continue to apply for the time provision service for the terminal device, the following S704 may not need to be performed.

For a specific implementation process of S703, refer to related descriptions in the following S805. Details are not described herein.

It should be noted that the foregoing S701 to S703 are a pre-determination process before the application network element applies for the time provision service for the terminal device. When applying for the time provision service for the terminal device, the application network element may directly request the time provision service from the time synchronization network element, and the foregoing S701 to S703 may not need to be performed. In other words, the foregoing S701 to S703 are optional steps.

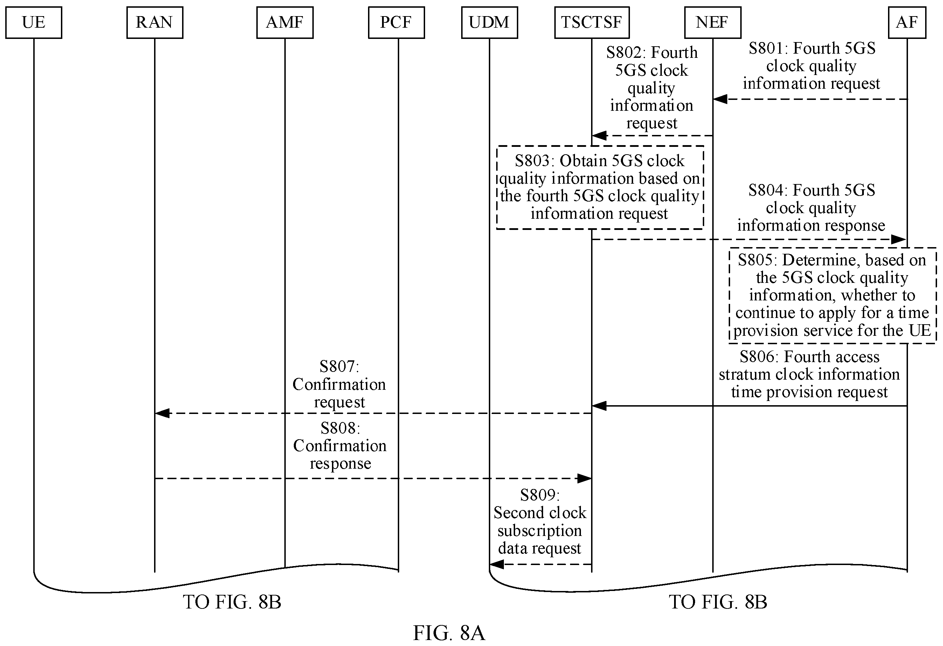

It may be understood that, after receiving a time provision service request initiated by the application network element, the time synchronization network element may indicate, based on the time provision request, an access network device to synchronize clock information of the wireless communication system for the terminal device. For a specific process, refer to the following time provision procedure shown in FIG. 8A and FIG. 8B. Details are not described herein.

S704: The application network element sends fifth indication information to the time synchronization network element. Correspondingly, the time synchronization network element receives the fifth indication information from the application network element.

For example, after determining to apply for the time provision service for the terminal device, the application network element may send the fifth indication information to the time synchronization network element. The fifth indication information indicates the wireless communication system to provide the quality information of the first clock for the terminal device, or the fifth indication information indicates the wireless communication system to provide the quality information of the first clock for the terminal device when providing time for the terminal device.

In addition, the fifth indication information may alternatively specifically indicate which quality information of the first clock needs to be provided by the wireless communication system for the terminal device. For example, the fifth indication information indicates the wireless communication system to provide the quality level and crystal oscillator stability of the first clock for the terminal device. The fifth indication information may alternatively not specifically indicate which quality information of the first clock needs to be provided by the wireless communication system for the terminal device, but only indicate that the wireless communication system needs to provide the quality information of the first clock for the terminal device. In this case, it may be considered that the fifth indication information indicates the wireless communication system to provide all quality information of the first clock for the terminal device. This is not limited in this embodiment of this application.

For a specific implementation process of S704, refer to related descriptions in the following S806. Details are not described herein.

S705: The time synchronization network element sends, to the access network device, information used to confirm whether the access network device has the quality information of the first clock. Correspondingly, the access network device receives, from the time synchronization network element, the information used to confirm whether the access network device has the quality information of the first clock.

For example, after receiving the fifth indication information, the time synchronization network element may further send confirmation information to the access network device that provides time for the terminal device. The confirmation information is used to confirm whether the access network device has the quality information of the first clock.

S706: The access network device sends a confirmation response to the time synchronization network element. Correspondingly, the time synchronization network element receives the confirmation response from the access network device.

In a possible design solution, if the quality information of the first clock is deployed on the access network device, the confirmation response indicates that the access network device has the quality information of the first clock. In this case, the time synchronization network element may not perform the following S707 and S708, but may indicate the access network device to provide the quality information of the first clock for the terminal device after confirming that the quality information of the first clock is deployed on the access network device.

In another possible design solution, if the quality information of the first clock is not deployed on the access network device, the confirmation response indicates that the access network device does not have the quality information of the first clock. In this case, the time synchronization network element performs the following S707 and S708.

It should be noted that the foregoing S705 and S706 are optional steps. For example, the time synchronization network element may directly obtain and provide the quality information of the first clock for the terminal device based on the fifth indication information without confirming whether the quality information of the first clock is deployed on the access network device.

For specific implementation processes of the foregoing S705 and S706, refer to related descriptions in the following S807 and S808. Details are not described herein.

S707: The time synchronization network element obtains the quality information of the first clock based on the fifth indication information.

In a possible design solution, when the foregoing S701 to S703 are not performed, after receiving the fifth indication information, the time synchronization network element may first determine whether the quality information of the first clock is locally deployed on the time synchronization network element. If the time synchronization network element determines that the quality information of the first clock is locally deployed on the time synchronization network element, the time synchronization network element locally obtains the quality information of the first clock based on the fifth indication information. If the time synchronization network element determines that the quality information of the first clock is not locally deployed on the time synchronization network element, the time synchronization network element may request the quality information of the first clock from a user plane network element or an operations, administration and maintenance network element.

In a possible design solution, S707 may include the following step 7-1 and step 7-2.

Step 7-1: The time synchronization network element sends a third message to the user plane network element based on the fifth indication information. The third message is used to request the quality information of the first clock.

For example, after determining that the quality information of the first clock is not deployed on the time synchronization network element, the time synchronization network element may send the third message to the user plane network element. The third message carries indication information (for example, the first indication information) used to request to obtain the quality information of the first clock, and the indication information used to request to obtain the quality information of the first clock indicates based on the fifth indication information. The user plane network element may be the foregoing UPF.

Step 7-2: The time synchronization network element receives the quality information of the first clock from the user plane network element.

For example, after receiving the third message, the user plane network element feeds back the requested quality information of the first clock to the time synchronization network element.

In another possible design solution, S707 may include the following step 8-1 and step 8-2.

Step 8-1: The time synchronization network element sends a fourth message to the operations, administration and maintenance network element based on the fifth indication information.

The fourth message is used to request the quality information of the first clock. The operations, administration and maintenance network element may be an OAM.

Step 8-2: The time synchronization network element receives the quality information of the first clock from the operations, administration and maintenance network element.

In another possible design solution, when the foregoing S701 to S703 are performed, after receiving the fifth indication information, the time synchronization network element may locally obtain the quality information of the first clock based on the fifth indication information, and the quality information of the first clock is obtained in the foregoing S702.

For a specific implementation process of S707, refer to related descriptions in the following S806. Details are not described herein.

S708: The time synchronization network element sends the quality information of the first clock to the terminal device. Correspondingly, the terminal device receives the quality information of the first clock from the time synchronization network element.

For example, after obtaining the quality information of the first clock, the time synchronization network element may send the quality information of the first clock to the access network device through a policy control network element and a mobility management network element. Then, the access network device sends the quality information of the first clock to the terminal device by using an RRC message or a SIB message. Alternatively, the time synchronization network element sends the quality information of the first clock to a mobility management network element through a policy control network element. Then, the mobility management network element sends the quality information of the first clock to the terminal device by using a NAS message. For a specific implementation process, refer to related descriptions in the following S812 to S815. Details are not described herein. The policy control network element may be the foregoing PCF, and the mobility management network element may be the foregoing AMF.

Then, after receiving the quality information of the first clock, the terminal device may determine, based on the quality information of the first clock, whether the access network device needs to continue to provide time for the terminal device.

For example, the terminal device may determine a change of the first clock based on the quality information of the first clock, compare the first clock with another available clock deployed on the terminal device, and determine whether the first clock can continue to be used as the grandmaster to provide clock information for the terminal device, to further confirm whether the access network device needs to continue to provide time for the terminal device. For example, the quality information of the first clock includes the quality level of the first clock, and the terminal device may compare the quality level of the first clock with a quality level of the another available clock deployed on the terminal device. If the quality level of the first clock is higher than the quality level of the another available clock deployed on the terminal device, the access network device continues to provide time for the terminal device. If the quality level of the first clock is lower than the quality level of the another available clock deployed on the terminal device, the terminal device determines that the access network device does not need to continue to provide time for the terminal device.

When the terminal device determines that the access network device needs to stop providing time for the terminal device:
In a possible design solution, the terminal device may send second indication information to the access network device, and receive fourth indication information from the access network device. The second indication information indicates that the terminal device requests to stop time provision, and the fourth indication information indicates that the access network device has stopped providing time for the terminal device. In this case, the access network device has a capability of determining to stop time provision. After receiving a time provision stop indication from the terminal device, the access network device may disable a capability of providing time for the terminal device, and notify the terminal device that the access network device no longer provides information of the first clock for the terminal device.

In another possible design solution, the terminal device may send second indication information to the mobility management network element, and the mobility management network element indicates the access network device to stop providing time for the terminal device. In this way, the terminal device receives fourth indication information from the access network device, and the fourth indication information notifies the terminal device that the access network device no longer provides information of the first clock for the terminal device. In this case, the mobility management network element has a capability of determining to stop time provision.

It may be understood that, in this case, the second indication information may be forwarded by the access network device to the mobility management network element.

In still another possible design solution, the terminal device may send second indication information to the time synchronization network element, and the time synchronization network element indicates the access network device to stop providing time for the terminal device. In this way, the terminal device receives fourth indication information from the access network device, and the fourth indication information notifies the terminal device that the access network device no longer provides information of the first clock for the terminal device. In this case, the time synchronization network element also has a capability of determining to stop time provision. It may be understood that, in this case, the second indication information may be sequentially forwarded by the access network device and the mobility management network element to the time synchronization network element.

In still another possible design solution, the terminal device may alternatively send sixth indication information to the application network element through an application stratum. Correspondingly, the application network element receives the sixth indication information from the terminal device. The sixth indication information indicates the application network element to stop applying for the time provision service for the terminal device.

Optionally, when sending the sixth indication information to the application network element, the terminal device may further send quality information of a current first clock to the application network element, to enable the application network element to determine whether to continue to apply for the time provision for the terminal device.

For a process in which the terminal device determines to stop the time provision, refer to the related descriptions in the foregoing S512 to S518. Details are not described herein again.

It may be understood that a process in which the terminal device obtains the quality information of the first clock may be implemented in a process of providing time for the terminal device. In addition, in the time provision process, if the quality information of the first clock is updated, updated quality information of the first clock may alternatively be provided for the terminal device by using the foregoing S701 to S708.

It should be noted that, after the terminal device obtains the quality information of the first clock, the quality information of the first clock may not only be used for clock comparison, to select a better and more accurate clock as the grandmaster, but also be used to determine a change of a status of the first clock. Alternatively, the quality information of the first clock may be used to provide the quality information of the first clock during time provision for a device associated with the terminal device. This is not specifically limited in this embodiment of this application.

Based on the communication method shown in FIG. 7, the time synchronization network element may obtain, based on the fifth indication information sent by the application network element, the quality information of the first clock, to provide the quality information of the first clock for the terminal device. Then, the terminal device may determine a more precise clock as the grandmaster based on the obtained quality information of the first clock. When the first clock is not as good as a local clock of the terminal device, the terminal device indicates, in time, a wireless communication network to stop providing time for the terminal device. This can reduce network overheads.

For ease of understanding, the following describes in detail, with reference to a 5GS and a specific scenario, a specific implementation process of the communication method shown in FIG. 7.

For example, an example in which the communication method provided in this embodiment of this application is applied to the 5GS architecture shown in FIG. 3, the terminal device is the UE, the access network device is the RAN, the mobility management network element is the AMF, the time synchronization network element is the TSCTSF, and the application network element is the AF is used to describe in detail the communication method provided in this embodiment of this application. The first clock is a reference clock in the 5GS, and the quality information of the first clock is 5GS clock quality information.

As shown in FIG. 8A and FIG. 8B, the communication method may include the following steps.

S801: An AF sends a fourth 5GS clock quality information request to a NEF. Correspondingly, the NEF receives the fourth 5GS clock quality information request from the AF.

The fourth 5GS clock quality information request (5GS clock quality info Request) is used to request to obtain 5GS clock quality information, and the 5GS clock quality information may represent a performance characteristic change of a 5GS clock. The fourth 5GS clock quality information request may carry an identifier of the AF and first indication information. The first indication information indicates to obtain the 5GS clock quality information, for example, request to obtain a quality level and precision of the 5GS clock.

In this embodiment of this application, the 5GS clock quality information may include one or more of the quality level, the precision, crystal oscillator stability, and UTC traceability (traceability) of the 5GS clock.

It may be understood that, after receiving the fourth 5GS clock quality information request of the AF, the NEF may authenticate the AF based on the identifier of the AF, to determine whether the AF is a third party trusted by an operator. If the AF is the third party trusted by the operator (in other words, the authentication succeeds or the authentication is passed), the NEF forwards the fourth 5GS clock quality information request to a TSCTSF, for example, performs the following S802. If the AF is a third party not trusted by the operator (in other words, the authentication fails), the NEF does not accept the fourth 5GS clock quality information request of the AF, and cannot perform a subsequent procedure.

S802: The NEF sends the fourth 5GS clock quality information request to the TSCTSF. Correspondingly, the TSCTSF receives the fourth 5GS clock quality information request from the NEF.

For example, after receiving the fourth 5GS clock quality information request from the AF, the NEF determines that the AF is the third party trusted by the operator, and forwards the fourth 5GS clock quality information request to the TSCTSF.

It may be understood that when the AF is the third party trusted by the operator, the AF may alternatively skip the NEF and directly send the fourth 5GS clock quality information request to the TSCTSF. In other words, S801 and S802 may be replaced with that the AF sends the fourth 5GS clock quality information request to the TSCTSF. Correspondingly, the TSCTSF receives the fourth 5GS clock quality information request from the AF.

S803: The TSCTSF requests to obtain the 5GS clock quality information based on the fourth 5GS clock quality information request.

For example, after receiving the fourth 5GS clock quality information request, the TSCTSF may confirm, based on the first indication information, whether the 5GS clock quality information is locally deployed on the TSCTSF.

In a possible design solution, if the 5GS clock quality information is deployed on the TSCTSF, the TSCTSF sends the 5GS clock quality information to the AF based on the first indication information. For example, if the first indication information indicates to obtain the quality level and precision of the 5GS clock, the TSCTSF feeds back the quality level and precision of the 5GS clock to the AF.

If the 5GS clock quality information is not deployed on the TSCTSF, the TSCTSF may obtain the 5GS clock quality information from a UPF or an OAM based on the first indication information. For a specific implementation process, refer to the related descriptions in the foregoing S403, S508 or S604. Details are not described herein again.

S804: The TSCTSF sends a fourth 5GS clock quality information response to the AF. Correspondingly, the AF receives the fourth 5GS clock quality information response sent by the TSCTSF.

The fourth 5GS clock quality information response carries the 5GS clock quality information.

It should be noted that if the first indication information includes a specific requested 5GS clock quality parameter, only the corresponding requested 5GS clock quality parameter may be returned in the response (for example, the fourth 5GS clock quality information response). For example, if the quality level and precision of the 5GS clock are requested to be obtained, the TSCTSF, OAM, or UPF may return only the quality level and precision of the 5GS clock. It may be understood that, in the foregoing response, all 5GS clock quality parameters configured on the OAM, UPF, or TSCTSF may alternatively be returned. In addition, if the 5GS clock quality parameter requested in the first indication information is a default value, in the response, some or all 5GS clock quality information configured on the OAM, UPF, or TSCTSF may alternatively be returned.

S805: The AF determines, based on the 5GS clock quality information, whether to continue to apply for a time provision service for UE.

For example, the AF may compare the fed-back 5GS clock quality information with quality information of another available clock deployed on the AF, and select a clock with better clock performance as a grandmaster to provide time for the UE.

For example, the fed-back 5GS clock quality information includes the quality level of the 5GS clock, and the AF may select a clock with a higher quality level as the grandmaster to provide time for the UE. In this way, the AF may compare the quality level of the 5GS clock with a quality level of the another available clock deployed on the AF. If the quality level of the 5GS clock is lower than the quality level of the another available clock deployed on the AF, the AF determines not to continue to apply for the time provision service for the UE, but provide time for the UE based on the clock with a higher quality level deployed on the AF. If the quality level of the 5GS clock is higher than the quality level of the another available clock deployed on the AF, the AF determines to continue to apply for the time provision service for the UE, and applies for the time provision service from the TSCTSF, for example, performs the following S806.

For another example, the fed-back 5GS clock quality information includes the precision of the 5GS clock, and the AF may select a clock with higher precision as the grandmaster to provide time for the UE. In this way, the AF may compare the precision of the 5GS clock with precision of the another available clock deployed on the AF. If the precision of the 5GS clock is lower than the precision of the another available clock deployed on the AF, the AF determines not to continue to apply for the time provision service for the UE, but provide time for the UE based on the clock with higher precision deployed on the AF. If the precision of the 5GS clock is higher than the precision of the another available clock deployed on the AF, the AF determines to continue to apply for the time provision service for the UE, and performs the following S806.

For still another example, the 5GS clock quality information fed back in a first response includes the crystal oscillator stability of the 5GS clock, and the AF may select a clock with good crystal oscillator stability as the grandmaster to provide time for the UE. In this way, the AF may compare the crystal oscillator stability of the 5GS clock with crystal oscillator stability of the another available clock deployed on the AF. If the crystal oscillator stability of the 5GS clock is worse than the crystal oscillator stability of the another available clock deployed on the AF, the AF determines not to continue to apply for the time provision service for the UE, but provide time for the UE based on a clock with higher precision deployed on the AF. If the crystal oscillator stability of the 5GS clock is better than the crystal oscillator stability of the another available clock deployed on the AF, the AF determines to continue to apply for the time provision service for the UE, and performs the following S806.

S806: The AF sends a fourth access stratum clock information time provision request to the TSCTSF. Correspondingly, the TSCTSF receives the fourth access stratum clock information time provision request from the AF.

The fourth access stratum clock information time provision request (ASTI_Create_Req) is used to request a 5GS or the TSCTSF to provide time for the UE. The fourth access stratum clock information time provision request carries an identifier of the UE, the identifier of the AF, a time synchronization service parameter (time sync service parameter), and fifth indication information.

In this embodiment of this application, the identifier of the UE is used to identify UE for which time needs to be provided, and the identifier of the UE may be a generic public subscription identifier (generic public subscription identifier, GPSI), or may be a permanent user identifier (subscription permanent identifier, SUPI). The time synchronization service parameter indicates a requirement on the time provision service requested for the UE, and the time synchronization service parameter may include one or more of a requested time synchronization type, a requirement on clock information, and a requirement on time provision information. The time synchronization type may be access stratum time synchronization and/or generalized precision time protocol gPTP time synchronization. The requirement on the clock information may be a requirement on precision of the clock information. The requirement on the time provision information may be a requirement on a time synchronization error (error budget) during time provision (which may be referred to as a time provision error for short), and the error budget indicates a maximum error of time synchronization in a core network-RAN-UE time provision process. For example, the AF requests, for the UE, an access stratum time synchronization time provision service with clock information precision of 0.01s and a time provision error not exceeding 0.05s. The fifth indication information indicates the 5GS to provide the 5GS clock quality information for the UE. In other words, the 5GS needs to provide the 5GS clock quality information for the UE when providing time for the UE.

It should be noted that the foregoing S801 to S805 are optional steps. Alternatively, the AF may not obtain the 5GS clock quality information to pre-determine whether to (continue to) apply for the time provision service for the UE, but directly send the fourth access stratum clock information time provision request to the TSCTSF, in other words, perform S806.

When the foregoing S801 to S805 are not performed, after receiving the fourth access stratum clock information time provision request, the TSCTSF may obtain the 5GS clock quality information based on the fifth indication information. A process in which the TSCTSF obtains the 5GS clock quality information is similar to that in the foregoing S803. Details are not described herein again.

Optionally, when the foregoing S801 to S805 are not performed, after receiving the fourth access stratum clock information time provision request, the TSCTSF may first determine whether the 5GS clock quality information is deployed on the TSCTSF. If the 5GS clock quality information is deployed on the TSCTSF, continue to perform the following S807. If the 5GS clock quality information is not deployed on the TSCTSF, the 5GS clock quality information may be obtained from the UPF or OAM. For a specific process, refer to the related descriptions in the foregoing step S803. Details are not described herein again.

When the foregoing S801 to S805 are performed, after receiving the fourth access stratum clock information time provision request, the TSCTSF may not need to obtain the 5GS clock quality information, but directly provide, for the UE based on the fifth indication information, the 5GS clock quality information that is obtained from S803 and that is locally stored.

It may be understood that, when the foregoing S801 to S805 are not performed, the AF may alternatively first send the fourth access stratum clock information time provision request to the NEF, and the NEF sends the fourth access stratum clock information time provision request to the TSCTSF after authentication is passed.

Further, the TSCTSF may determine a RAN that provides time for the UE, and may calculate a RAN air interface time provision error (Uu error budget) based on the error budget. The Uu error budget indicates a maximum error of providing time for the UE by the RAN. For the Uu error budget, if the fourth access stratum clock information time provision request has a requirement on an upper limit of the error budget, the TSCTSF may subtract a core network time provision error from the error budget required in the time provision request to obtain the Uu error budget. If the fourth access stratum clock information time provision request does not have a requirement on an upper limit of the error budget, the TSCTSF may subtract a core network time provision error from the pre-configured error budget to obtain the Uu error budget. This is not limited in this embodiment of this application.

S807: The TSCTSF sends a confirmation request to the RAN. Correspondingly, the RAN receives the confirmation request from the TSCTSF.

The confirmation request is used to confirm whether the 5GS clock quality information is deployed on the RAN, and the confirmation request carries information used to confirm whether the RAN has the 5GS clock quality information.

For example, after receiving the fourth access stratum clock information time provision request, the TSCTSF may send the confirmation request to the RAN based on the fifth indication information, to confirm whether the 5GS clock quality information is deployed on the RAN.

S808: The RAN sends a confirmation response to the TSCTSF. Accordingly, the TSCTSF receives the confirmation response from the RAN.

The confirmation response indicates whether the RAN has the 5GS clock quality information. If the 5GS clock quality information is deployed on the RAN, the confirmation response indicates that the RAN has the 5GS clock quality information. In this way, the TSCTSF does not need to provide the 5GS clock quality information for the RAN. When the 5GS clock quality information is not deployed on the TSCTSF, the TSCTSF may not need to obtain the 5GS clock quality information from the OAM or UPF, and only need to notify the RAN that the RAN needs to provide the 5GS clock quality information for the UE when providing time for the UE. If the 5GS clock quality information is not deployed on the RAN, the confirmation response indicates that the RAN does not have the 5GS clock quality information. In this way, the TSCTSF needs to provide the 5GS clock quality information for the RAN. When the 5GS clock quality information is not deployed on the TSCTSF, the TSCTSF also needs to obtain the 5GS clock quality information from the OAM or UPF.

It may be understood that the foregoing S807 and S808 are optional steps. The TSCTSF may not confirm, with the RAN, whether the RAN has the 5GS clock quality information, and provide the 5GS clock quality information for the RAN or UE in a process of indicating the RAN to provide time for the UE.

S809: The TSCTSF sends a second clock subscription data request to a UDM. Correspondingly, the UDM receives the second clock subscription data request from the TSCTSF.

For example, after receiving the fourth access stratum clock information time provision request, if clock subscription data of the UE is deployed on the UDM, the TSCTSF may alternatively send the second clock subscription data request to the UDM, and perform the time provision for the UE with reference to the clock subscription data of the UE.

The second clock subscription data request (Nudm_SDM_Get_Req) is used to request the clock subscription data of the UE, and the second clock subscription data request carries the identifier of the UE. The clock subscription data of the UE may include one or more of a time synchronization type supported by the UE, a time synchronization error allowed by the UE, and clock precision allowed by the UE.

S810: The UDM sends a second clock subscription data response to the TSCTSF. Correspondingly, the TSCTSF receives the second clock subscription data response from the UDM.

The second clock subscription data response (Nudm_SDM_Get_Resp) carries the clock subscription data of the UE.

In this embodiment of this application, if the second clock subscription data request indicates which clock subscription data of the UE needs to be obtained, the second clock subscription data response may feed back the required clock subscription data of the UE or all clock subscription data of the UE. For example, if the second clock subscription data request is used to request a subscribed time synchronization type of the UE, the second clock subscription data response may feed back only the subscribed time synchronization type of the UE, or may feed back all the clock subscription data of the UE. Alternatively, if the second clock subscription data request does not indicate which clock subscription data of the UE needs to be obtained, the second clock subscription data response may also feed back some or all the clock subscription data of the UE. This is not limited in this embodiment of this application.

In addition, in some embodiments, if the clock subscription data of the UE is not stored in the UDM, the second clock subscription data response may notify the TSCTSFU that there is no clock subscription data of the UE or the UDM does not have the clock subscription data of the UE.

S811: The TSCTSF determines, based on the clock subscription data of the UE, whether the UE subscribes to a time synchronization service corresponding to the time synchronization service parameter.

For example, the time synchronization type subscribed by the UE in the clock subscription data of the UE is the access stratum time synchronization, but the time synchronization type of the UE requested in the time synchronization service parameter in the fourth access stratum clock information time provision request is the gPTP time synchronization. In this case, the clock subscription data of the UE does not support the UE in performing gPTP time synchronization, and the TSCTSF rejects the fourth access stratum clock information time provision request of the AF, and does not perform the time provision service for the UE. On the contrary, if the time synchronization type of the UE requested in the time synchronization service parameter in the fourth access stratum clock information time provision request is the access stratum time synchronization, the TSCTSF may select a suitable time provision device for the UE based on the time synchronization service parameter requested for the UE, namely, a time provision service requirement, and activate a time provision capability of the device.

For another example, in the clock subscription data of the UE, precision of the access stratum time synchronization subscribed by the UE is 0.01s, but precision of the access stratum time synchronization requested in the time synchronization service parameter in the fourth access stratum clock information time provision request is 0.05s. In this case, the clock subscription data of the UE does not support the access stratum time synchronization with the precision of 0.05s, and the TSCTSF rejects the fourth access stratum clock information time provision request of the AF, and does not perform the time provision service for the UE. On the contrary, if precision of the access stratum time synchronization requested in the time synchronization service parameter in the fourth access stratum clock information time provision request is 0.01s, the TSCTSF may select a suitable time provision device for the UE based on the time synchronization service parameter requested for the UE, namely, a time provision service requirement, and activate a time provision capability of the device.

It should be noted that in this embodiment of this application, the RAN is selected as a clock source, namely, a time provision device, to provide 5GS clock information for the UE.

When the TSCTSF determines, based on the clock subscription data of the UE, that the UE subscribes to the time synchronization service corresponding to the time synchronization service parameter, the TSCTSF may calculate the RAN air interface time provision error (Uu error budget) based on the error budget when determining to activate, for the UE, a time provision capability of the RAN that performs time provision. The Uu error budget indicates the maximum error of providing time for the UE by the RAN. For the Uu error budget, if the fourth access stratum clock information time provision request has a requirement on an upper limit of the error budget, the TSCTSF may subtract a core network time provision error from the error budget required in the first access stratum clock information time provision request to obtain the Uu error budget. If the first access stratum clock information time provision request does not have a requirement on an upper limit of the error budget, the TSCTSF may subtract a core network time provision error from the pre-configured error budget to obtain the Uu error budget. This is not limited in this embodiment of this application.

It may be understood that, the foregoing S808 to S811 are optional steps. For example, if the clock subscription data of the UE is not stored in the UDM, the foregoing S808 to S811 may not be performed. In other words, the TSCTSF may not provide the time provision service for the UE with reference to the clock subscription data of the UE, but provide the time provision service for the UE based on a time provisionrequest.

In addition, both the foregoing S807 and S808 and S809 to S811 are optional steps. The foregoing S807 and S808 and S809 to S811 may be performed, may not be performed, or only one of the foregoing S807 and S808 and S809 to S811 may be performed. When both the foregoing S807 and S808 and S809 to S811 may be performed, a sequence of performing S807 and S808 and S809 to S811 is not limited.

S812: The TSCTSF sends an access and mobility (access and mobility, AM) policy (policy) create/update request to a PCF. Correspondingly, the PCF receives the AM policy create/update request from the TSCTSF.

For example, after receiving the fourth access stratum clock information time provision request, the TSCTSF initiates the AM policy create/update request to the PCF when determining to continue to provide time for the UE and/or when the RAN does not have the 5GS clock quality information, to continue a subsequent time provision procedure. The AM policy create/update request (AMPolicyAuthorization_Create/Update req) carries UE time synchronization data (UE Time Sync Data) and the 5GS clock quality information. The time synchronization data of the UE may include a time provision capability enabling indication (which may also be referred to as a time provision indication) and the Uu error budget, and the time provision capability enabling indication is used to activate the time provision capability of the RAN.

S813: The PCF initiates, to the AMF, AM policy update for the UE.

In a process in which the PCF and the AMF update the AM policy of the UE, the PCF sends the UE time synchronization data and the 5GS clock quality information to the AMF. It should be noted that in this embodiment of this application, for an AM policy update process, refer to an existing implementation process. Details are not described herein.

S814: The AMF sends a second UE context modification request to the RAN. Correspondingly, the RAN receives the second UE context modification request from the AMF.

The second UE context modification request (UE Context Modification req) carries the UE time synchronization data and the 5GS clock quality information, and is used to configure the time provision capability of the RAN. The RAN may enable the time provision capability based on the time provision capability enabling indication in the UE time synchronization data, and provide the 5GS clock information for the UE based on the Uu error budget.

S815: The RAN provides time for the UE.

For example, the RAN may provide time for the UE based on the Uu error budget, and send the 5GS clock quality information to the UE when sending the 5GS clock information to the UE. The 5GS clock quality information may be used by the UE to determine whether the RAN needs to continue to provide time for the UE. The RAN may send the 5GS clock information and the 5GS clock quality information by using an RRC message or a SIB message. For example, the RAN broadcasts SIB19 to perform, for the UE, time provision with the 5GS clock quality information. In other words, the SIB19 carries the 5GS clock information and the 5GS clock quality information.

Optionally, when providing time for the UE, the RAN may alternatively not send the 5GS clock quality information to the UE, and only needs to provide the 5GS clock information for the UE. Instead, the AMF sends a NAS message to the UE, and the NAS message includes the 5GS clock quality information. In other words, the AMF initiates a DL NAS message to transparently transmit the 5GS clock quality information to the UE through the RAN, and the RAN only needs to perform the time provision for the UE.

S816: The RAN sends a second UE context modification response to the AMF. Correspondingly, the AMF receives the second UE context modification response from the RAN.

The second UE context modification response (UE Context Modification resp) may be used to notify the AMF that the time provision for the UE has been completed.

S817: The PCF sends an AM policy create/update response to the TSCTSF. Correspondingly, the TSCTSF receives the AM policy create/update response from the PCF.

The AM policy create/update response (AMPolicy Authoritation Create/Update resp) may be used to notify the TSCTSF that the time provision for the UE has been completed.

S818: The TSCTSF sends a fourth access stratum clock information time provision response to the AF. Correspondingly, the AF receives the fourth access stratum clock information time provision response from the TSCTSF.

The fourth access stratum clock information time provision response (ASTI_Create_Resp) may be used to notify the AF that the time provision for the UE has been completed.

Then, after receiving the 5GS clock quality information, the UE may alternatively determine, based on the 5GS clock quality information, whether the RAN needs to continue to provide time for the UE. For details, refer to the related descriptions in the foregoing S512 to S518. Details are not described herein again.

In addition to the manner of indicating to stop the time provision described in the foregoing S512 to S518, the UE may alternatively send a time provision stop request to the AF through an application stratum. The time provision stop request carries sixth indication information, and the sixth indication information indicates the AF to request to stop applying for the time provision service for the UE, to no longer provide the 5GS clock information for the UE.

Based on the communication method shown in FIG. 8A and FIG. 8B, the AF may request the 5GS to synchronize the 5GS clock information for the UE. The AF indicates, in the time provision request sent to the TSCTSF, the 5GS to provide the 5GS clock quality information for the UE, so that the 5GS clock quality information can be distributed to the RAN and UE in the process of providing time for the UE.

It may be understood that, in the foregoing embodiments, the methods and/or steps implemented by the first network element may alternatively be implemented by a component (for example, a processor, a chip, a chip system, a circuit, a logic module, or software) that can be used in the first network element. The methods and/or steps implemented by the second network element may alternatively be implemented by a component (for example, a processor, a chip system, a circuit, a logical module, or software) that can be used in the second network element. The methods and/or steps implemented by the time synchronization network element may alternatively be implemented by a component (for example, a processor, a chip, a chip system, a circuit, a logical module, or software) that can be used in the time synchronization network element. The methods and/or steps implemented by the application network element may alternatively be implemented by a component (for example, a processor, a chip, a chip system, a circuit, a logical module, or software) that can be used in the application network element. The methods and/or steps implemented by the terminal device may alternatively be implemented by a component (for example, a processor, a chip, a chip system, a circuit, a logical module, or software) that can be used in the terminal device.

The foregoing mainly describes the solutions provided in this application. Correspondingly, a communication apparatus is further provided in this application. The communication apparatus is configured to implement the methods in the foregoing method embodiments. The communication apparatus may be the first network element in the foregoing method embodiments, an apparatus including the first network element, or a component that can be used in the first network element, for example, a chip or a chip system. Alternatively, the communication apparatus may be the second network element in the foregoing method embodiments, an apparatus including the second network element, or a component that can be used in the second network element, for example, a chip or a chip system. Alternatively, the communication apparatus may be the time synchronization network element in the foregoing method embodiments, an apparatus including the time synchronization network element, or a component that can be used in the time synchronization network element, for example, a chip or a chip system. Alternatively, the communication apparatus may be the application network element in the foregoing method embodiments, an apparatus including the application network element, or a component that can be used in the application network element, for example, a chip or a chip system. Alternatively, the communication apparatus may be the terminal device in the foregoing method embodiments, an apparatus including the terminal device, or a component that can be used in the terminal device, for example, a chip or a chip system.

It may be understood that, to implement the foregoing functions, the communication apparatus includes corresponding hardware structures and/or software modules for performing the functions. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A professional technician may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that module division in embodiments of this application is an example, and is merely logical function division. In actual implementation, there may be another division manner.

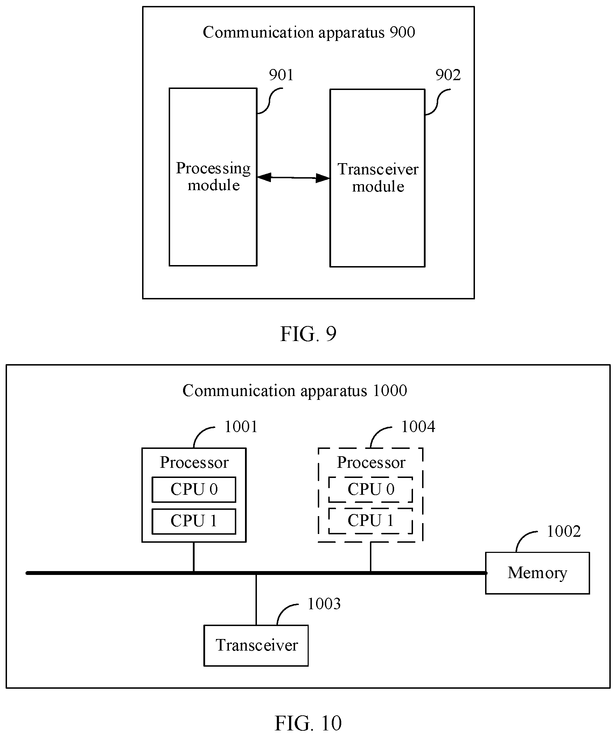

For example, the communication apparatus is the first network element, the second network element, the time synchronization network element, the application network element, or the terminal device in the foregoing method embodiments. FIG. 9 is a diagram of a structure of a communication apparatus according to an embodiment of this application. As shown in FIG. 9, a communication apparatus 900 includes a processing module 901 and a transceiver module 902.

The processing module 901 is configured to perform a processing function of the first network element, the second network element, the time synchronization network element, the application network element, or the terminal device in the foregoing method embodiments. The transceiver module 902 is configured to perform a transceiver function of the first network element, the second network element, the time synchronization network element, the application network element, or the terminal device.

Optionally, the transceiver module 902 may include a sending module and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9), and the storage module stores a program or instructions. When a processing module 903 executes the program or instructions, the communication apparatus 900 is enabled to perform the functions of the first network element, the second network element, the time synchronization network element, the application network element, or the terminal device in the communication method shown in FIG. 4 or FIG. 7.

All related content of the steps in the foregoing method embodiments may be cited in function descriptions of the corresponding functional modules. Details are not described herein again.

Because the communication apparatus 900 provided in this embodiment may perform the foregoing communication method. Therefore, for technical effects that can be achieved by the communication apparatus 900, refer to the foregoing method embodiments. Details are not described herein again.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

For example, FIG. 10 is a diagram of a structure of another communication apparatus according to an embodiment of this application. The communication apparatus may be a terminal device or a network device, or may be a chip (system) or another part or component that may be disposed in the terminal device or the network device. As shown in FIG. 10, a communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following specifically describes components of the communication apparatus 1000 with reference to FIG. 10.

The processor 1001 is a control center of the communication apparatus 1000, and may be one processor, or may be a collective term of a plurality of processing elements. For example, the processor 1001 is one or more central processing units (central processing units, CPUs), may be an application-specific integrated circuit (application specific integrated circuit, ASIC), or is configured as one or more integrated circuits for implementing embodiments of this application, for example, one or more microprocessors (digital signal processors, DSPs), or one or more field programmable gate arrays (field programmable gate arrays, FPGAs).

Optionally, the processor 1001 may perform various functions of the communication apparatus 1000 by running or executing a software program stored in the memory 1002 and invoking data stored in the memory 1002.

In specific implementation, in an embodiment, the processor 1001 may include one or more CPUs, for example, a CPU 0 and a CPU 1 shown in FIG. 10.

In specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may refer to one or more devices, circuits, and/or processing cores configured to process data (for example, computer program instructions).

The memory 1002 is configured to store a software program for performing the solutions of this application, and the processor 1001 controls execution of the software program. For a specific implementation, refer to the foregoing method embodiments. Details are not described herein again.

Optionally, the memory 1002 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer, but is not limited thereto. The memory 1002 may be integrated with the processor 1001, or may exist independently, and is coupled to the processor 1001 through an interface circuit (not shown in FIG. 10) of the communication apparatus 1000. This is not specifically limited in this embodiment of this application.

The transceiver 1003 is configured to communicate with another communication apparatus. For example, the communication apparatus 1000 is a terminal device, and the transceiver 1003 may be configured to communicate with a network device or communicate with another terminal device. For another example, the communication apparatus 1000 is a network device, and the transceiver 1003 may be configured to communicate with a terminal device or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently, and is coupled to the processor 1001 through an interface circuit (not shown in FIG. 10) of the communication apparatus 1000. This is not specifically limited in this embodiment of this application.

It should be noted that a structure of the communication apparatus 1000 shown in FIG. 10 does not constitute a limitation on the communication apparatus. An actual communication apparatus may include more or fewer components than those shown in the figure, combine some components, or have different component arrangement.

In addition, for technical effects of the communication apparatus 1000, refer to the technical effects of the communication method in the foregoing method embodiments. Details are not described herein again.

An embodiment of this application provides a communication system. The communication system includes the first network element, the second network element, and the terminal device.

An embodiment of this application provides another communication system. The communication system includes the time synchronization network element, the application network element, and the terminal device.

An embodiment of this application further provides a computer-readable storage medium. The computer-readable storage medium stores a computer program or instructions. When the computer program or instructions are executed by a computer, functions in any one of the foregoing method embodiments are implemented.

An embodiment of this application further provides a computer program product. When the computer program product is executed by a computer, functions in any one of the foregoing method embodiments are implemented.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the processes do not mean execution sequences in various embodiments of this application. The execution sequences of the foregoing processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A professional technician may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electrical, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps in the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a first network element, that quality information of a first clock needs to be obtained, wherein the first clock is a reference clock of a wireless communication system;
sending, by the first network element, first indication information to a second network element, wherein the first indication information indicates to obtain the quality information of the first clock;
receiving, by the first network element, the quality information of the first clock from the second network element; and
sending, by the first network element, the quality information of the first clock to a terminal device.

2. The method according to claim 1, wherein the first network element is a mobility management network element; and the determining, by a first network element, that quality information of a first clock needs to be obtained comprises:
sending, by the first network element to an access network device, information used to confirm whether the access network device has the quality information of the first clock;
receiving, by the first network element, a confirmation response from the access network device, wherein the confirmation response indicates that the access network device does not have the quality information of the first clock; and
determining, by the first network element based on the confirmation response, that the quality information of the first clock needs to be obtained.

3. The method according to claim 2, wherein the sending, by the first network element, the quality information of the first clock to a terminal device comprises:
sending, by the first network element, a non-access stratum NAS message to the terminal device, wherein the NAS message comprises the quality information of the first clock.

4. The method according to claim 2 or 3, wherein the method further comprises:
receiving, by the first network element, second indication information from the terminal device, wherein the second indication information indicates that the terminal device requests to stop time provision; and
sending, by the first network element, third indication information to the access network device, wherein the third indication information indicates the access network device to stop providing time for the terminal device.

5. The method according to any one of claims 2 to 4, wherein the second network element is an operations, administration and maintenance network element or a time synchronization network element.

6. The method according to claim 1, wherein the first network element is an access network device, and the determining, by a first network element, that quality information of a first clock needs to be obtained comprises:
receiving, by the first network element, a time provision request from the terminal device, wherein the time provision request comprises the first indication information;
determining, by the first network element based on the first indication information, whether the first network element has the quality information of the first clock; and
determining, by the first network element when determining that the first network element does not have the quality information of the first clock, that the quality information of the first clock needs to be obtained.

7. The method according to claim 6, wherein the method further comprises:
receiving, by the first network element, second indication information from the terminal device, wherein the second indication information indicates that the terminal device requests to stop time provision; and
sending, by the first network element, fourth indication information to the terminal device, wherein the fourth indication information indicates that the first network element has stopped providing time for the terminal device.

8. The method according to claim 6 or 7, wherein the sending, by the first network element, the quality information of the first clock to a terminal device comprises:
sending, by the first network element, a radio resource control RRC message to the terminal device, wherein the RRC message comprises the quality information of the first clock.

9. The method according to claim 6 or 7, wherein the sending, by the first network element, the quality information of the first clock to a terminal device comprises:
sending, by the first network element, a system message to the terminal device, wherein the system message comprises the quality information of the first clock.

10. The method according to any one of claims 1 to 9, wherein the quality information of the first clock comprises one or more of the following: a quality level, crystal oscillator stability, precision, or coordinated universal time UTC traceability.

11. A communication method, wherein the method comprises:
receiving, by a second network element, first indication information from a first network element, wherein the first indication information indicates to obtain quality information of a first clock, and the first clock is a reference clock of a wireless communication system;
obtaining, by the second network element, the quality information of the first clock based on the first indication information; and
sending, by the second network element, the quality information of the first clock to the first network element.

12. The method according to claim 11, wherein the second network element is a time synchronization network element; and the obtaining, by the second network element, the quality information of the first clock based on the first indication information comprises:
sending, by the second network element, a first message to a user plane network element based on the first indication information, wherein the first message is used to request the quality information of the first clock; and
receiving, by the second network element, the quality information of the first clock from the user plane network element.

13. The method according to claim 11, wherein the second network element is a time synchronization network element; and the obtaining, by the second network element, the quality information of the first clock based on the first indication information comprises:
sending, by the second network element, a second message to an operations, administration and maintenance network element based on the first indication information, wherein the second message is used to request the quality information of the first clock; and
receiving, by the second network element, the quality information of the first clock from the operations, administration and maintenance network element.

14. The method according to claim 12 or 13, wherein the method further comprises:
receiving, by the second network element, second indication information from a terminal device, wherein the second indication information indicates that the terminal device requests to stop time provision; and
sending, by the second network element, third indication information to an access network device, wherein the third indication information indicates the access network device to stop providing time for the terminal device.

15. The method according to any one of claims 11 to 14, wherein the first network element is a mobility management network element or the access network device.

16. The method according to claim 11, wherein the first network element is a mobility management network element, and the second network element is an operations, administration and maintenance network element.

17. The method according to any one of claims 11 to 16, wherein the quality information of the first clock comprises one or more of the following: a quality level, crystal oscillator stability, precision, or coordinated universal time UTC traceability.

18. A communication method, wherein the method comprises:
receiving, by a time synchronization network element, fifth indication information from an application network element, wherein the fifth indication information indicates a wireless communication network to provide quality information of a first clock for a terminal device, and the first clock is a reference clock of the wireless communication system;
obtaining, by the time synchronization network element, the quality information of the first clock based on the fifth indication information; and
sending, by the time synchronization network element, the quality information of the first clock to the terminal device.

19. The method according to claim 18, wherein the obtaining, by the time synchronization network element, the quality information of the first clock based on the fifth indication information comprises:
sending, by the time synchronization network element, a third message to a user plane network element based on the fifth indication information, wherein the third message is used to request the quality information of the first clock; and
receiving, by the time synchronization network element, the quality information of the first clock from the user plane network element.

20. The method according to claim 18, wherein the obtaining, by the time synchronization network element, the quality information of the first clock based on the fifth indication information comprises:
sending, by the time synchronization network element, a fourth message to an operations, administration and maintenance network element based on the fifth indication information, wherein the fourth message is used to request the quality information of the first clock; and
receiving, by the time synchronization network element, the quality information of the first clock from the operations, administration and maintenance network element.

21. The method according to claim 18, wherein before the receiving, by a time synchronization network element, fifth indication information from an application network element, the method further comprises:
receiving, by the time synchronization network element, first indication information from the application network element, wherein the first indication information indicates to obtain the quality information of the first clock, and the quality information of the first clock is used by the application network element to determine whether to continue to apply for a time provision service for the terminal device;
obtaining, by the time synchronization network element, the quality information of the first clock based on the first indication information; and
sending, by the time synchronization network element, the quality information of the first clock to the application network element; and
correspondingly, the obtaining, by the time synchronization network element, the quality information of the first clock based on the fifth indication information comprises:
locally obtaining, by the time synchronization network element, the quality information of the first clock based on the fifth indication information.

22. The method according to any one of claims 18 to 21, wherein the sending, by the time synchronization network element, the quality information of the first clock to the terminal device comprises:
sending, by the time synchronization network element to an access network device, information used to confirm whether the access network device has the quality information of the first clock;
receiving, by the time synchronization network element, a confirmation response from the access network device, wherein the confirmation response indicates that the access network device does not have the quality information of the first clock; and
sending, by the time synchronization network element, the quality information of the first clock to the terminal device based on the confirmation response.

23. The method according to any one of claims 18 to 22, wherein the method further comprises:
receiving, by the time synchronization network element, second indication information from the terminal device, wherein the second indication information indicates that the terminal device requests to stop time provision; and
sending, by the time synchronization network element, third indication information to the access network device, wherein the third indication information indicates the access network device to stop providing time for the terminal device.

24. The method according to any one of claims 18 to 23, wherein the quality information of the first clock comprises one or more of the following: a quality level, crystal oscillator stability, precision, or coordinated universal time UTC traceability.

25. A communication method, wherein the method comprises:
sending, by an application network element, fifth indication information to a time synchronization network element, wherein the fifth indication information indicates a wireless communication system to provide quality information of a first clock for a terminal device, and the first clock is a reference clock of the wireless communication system.

26. The method according to claim 25, wherein before the sending, by an application network element, fifth indication information to a time synchronization network element, the method further comprises:
sending, by the application network element, first indication information to the time synchronization network element, wherein the first indication information indicates to obtain the quality information of the first clock;
receiving, by the application network element, the quality information of the first clock from the time synchronization network element; and
determining, by the application network element based on the quality information of the first clock, to continue to apply for a time provision service for the terminal device.

27. The method according to claim 25 or 26, wherein the method further comprises:
receiving, by the application network element, sixth indication information from the terminal device, wherein the sixth indication information indicates the application network element to request to stop applying for the time provision service for the terminal device.

28. The method according to any one of claims 25 to 27, wherein the quality information of the first clock comprises one or more of the following: a quality level, crystal oscillator stability, precision, or coordinated universal time UTC traceability.

29. A communication apparatus, wherein the apparatus comprises a processing module and a transceiver module, wherein
the processing module is configured to perform a processing function of the method according to any one of claims 1 to 28; and
the transceiver module is configured to perform a transceiver function of the method according to any one of claims 1 to 28.

30. A communication apparatus, comprising a processor, wherein the processor is coupled to a memory;
the memory is configured to store a computer program; and
the processor is configured to execute the computer program stored in the memory, to enable the communication apparatus to perform the communication method according to any one of claims 1 to 28.
